(19) **Europäisches Patentamt / European Patent Office / Office européen des brevets**

(11) **EP 3 591 973 A1**

(12) # EUROPEAN PATENT APPLICATION
published in accordance with Art. 153(4) EPC

(43) Date of publication:
**08.01.2020 Bulletin 2020/02**

(51) Int Cl.:
**H04N 19/50** (2014.01)

(21) Application number: **17902309.8**

(22) Date of filing: **22.03.2017**

(86) International application number:
**PCT/CN2017/077706**

(87) International publication number:
**WO 2018/170793 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Huawei Technologies Co., Ltd.**
  **Longgang District**
  **Shenzhen, Guangdong 518129 (CN)**
• **Tsinghua University**
  **Beijing 100084 (CN)**

(72) Inventors:
• **NIU, Benben**
  **Beijing 100084 (CN)**

• **YU, Quanhe**
  **Shenzhen**
  **Guangdong 518129 (CN)**
• **CHEN, Junyou**
  **Beijing 100084 (CN)**
• **ZHENG, Jianhua**
  **Shenzhen**
  **Guangdong 518129 (CN)**
• **HE, Yun**
  **Beijing 100084 (CN)**

(74) Representative: **Körber, Martin Hans**
  **Mitscherlich PartmbB**
  **Patent- und Rechtsanwälte**
  **Sonnenstrasse 33**
  **80331 München (DE)**

(54) **METHOD AND APPARATUS FOR DECODING VIDEO DATA, AND METHOD AND APPARATUS FOR ENCODING VIDEO DATA**

(57) Embodiments of the present invention disclose a video data decoding method. The method includes: receiving a bitstream; parsing the bitstream to obtain residual data of a current to-be-decoded image block, prediction information of the current to-be-decoded image block, and a pixel value transformation mode identifier of the current to-be-decoded block; obtaining predictors of the current to-be-decoded image block; obtaining reconstructed pixel values of pixels of the current to-be-decoded image block; and performing spatial transformation on the reconstructed pixel values of the pixels of the current to-be-decoded image block according to a pixel value transformation mode corresponding to the transformation mode identifier of the current to-be-decoded image block, to obtain transformed pixel values of the pixels of the current to-be-decoded image block. The embodiments of the present invention further disclose a video data encoding method, a decoding apparatus, and an encoding apparatus. According to the encoding/decoding method and the encoding/decoding apparatus in the embodiments of the present invention, deformation and motion of an object are considered in a pixel prediction process, and a possible deformation status of the object can be well covered.

EP 3 591 973 A1

(Cont. next page)

FIG. 7

**Description**

**TECHNICAL FIELD**

The present invention relates to the field of video encoding and decoding technologies, and in particular, to a video data decoding method, a decoding apparatus, an encoding method, and an encoding apparatus.

**BACKGROUND**

Many apparatuses have functions of processing video data. These apparatuses include a digital television, a digital live broadcasting system, a wireless broadcasting system, a personal digital assistant (personal digital assistant, PDA), a laptop or desktop computer, a tablet computer, an electronic book reader, a digital camera, a digital recording apparatus, a digital media player, a video game apparatus, a video game console, a cellular or satellite radio telephone, a video conferencing apparatus, a video streaming apparatus, and the like. The digital video apparatus implements video compression technologies, such as those video compression technologies described in standards defined by MPEG-2, MPEG-4, ITU-T H.263, ITU-T H.264/MPEG-4 Part 10 advanced video coding (AVC), and ITU-T H.265 high efficiency video coding (HEVC) and extensions of the standards, to transmit and receive digital video information more efficiently. The video apparatus may transmit, receive, encode, decode and/or store digital video information more efficiently by implementing these video codec technologies.

In the field of video encoding and decoding, the concept of a frame refers to a complete picture, and pictures of frames can be played after the pictures form a video format according to a specific sequence and a frame rate. When a frame rate reaches a specific speed, and a time interval between two frames is less than a resolution limit of a human eye, a short visual stay occurs. A basis for implementing compression of a video file is compression coding of a single-frame digital image, and there are many pieces of repeated representation information in a digitized image, which is referred to as redundant information. Many same or similar spatial structures are usually present in an image, for example, there is a close correlation and similarity between sampling point colors in a same object or background. In a multi-frame image group, basically an image of a frame is highly correlated with a previous frame or a subsequent frame of the image, and pixel values for describing information vary slightly. These are all compressible parts. Similarly, there is not only space redundancy information in the video file, but also a large amount of time redundancy information. This is caused by a composition structure of the video. For example, a frame rate of video sampling is usually 25 frames per second to 30 frames per second, and may be 60 frames per second in a special case. In other words, a sampling time interval between two adjacent frames is at least 1/30 second to 1/25 second. In such a short time, a large amount of similar information exists in all images obtained through sampling, and there is a large correlation between the images. However, in an original digital video recording system, these images are independently recorded without considering and utilizing these similarities and coherence, resulting in a considerable amount of repeated and redundant data. In addition, research has shown that, from a perspective of a psychological feature of visual sensitivity of a human eye, video information also has a part that can be used to compress, that is, visual redundancy. Visual redundancy refers to appropriately compressing a video bit stream by using a victory feature in which a human eye is relatively sensitive to a luminance change and relatively insensitive to a chromaticity change. In a high-luminance area, sensitivity of human vision to luminance changes tends to decrease, and the human eye is relatively insensitive to an internal area of an object and a change of internal details; instead, the human eye is relatively sensitive to an edge and an overall structure of the object. Because the video image information finally serves our human group, these features of the human eye can be fully utilized to perform compression processing on the original video image information to achieve a better compression effect. In addition to the preceding space redundancy, time redundancy, and visual redundancy, a series of redundancy information such as information entropy redundancy, structural redundancy, knowledge redundancy, importance redundancy, and the like may exist in the video image information. A purpose of video compression coding is to remove redundant information in a video sequence by using various technical methods, so as to reduce storage space and save transmission bandwidth.

In terms of a current technology development status, video compression technologies mainly include intra-frame prediction, inter-frame prediction, transform quantization, entropy encoding, block elimination filtering, and the like. Within an international general scope, there are four main compression coding modes in existing video compression coding standards: chromaticity sampling, prediction coding, transform coding, and quantization coding.

Prediction coding: A current to-be-encoded frame is predicted by using data information of a previously encoded frame. A predictor is obtained through prediction. The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image. This is a basic idea and method of prediction coding. In mainstream coding standards, prediction coding is classified into two basic categories: intra-frame prediction and inter-frame prediction.

1. Intra-frame prediction technology

Intra-frame prediction is a prediction technology in which prediction is performed by using a correlation between pixels in a same image. Mainstream standards such as H.265, H.264, VP8, and VP9 all use this technology. By using H.265 and H.264 as an example, reconstruction values of adjacent blocks are used for prediction. A largest difference in intra-frame prediction between H.265 and H.264 lies in that H.265 uses more and larger sizes to adapt to a content feature of a high-definition video and supports more intra-frame prediction modes to adapt to richer textures.

H.264 specifies three types of luminance intra-frame prediction blocks: 4*4, 8*8, and 16*16. Intra-frame prediction blocks for chrominance components are based on 8*8 blocks. A 4*4 luminance block and an 8*8 luminance block each include nine prediction modes (vertical, horizontal, DC, lower left diagonal mode, lower right diagonal mode, vertical rightward mode, horizontal downward mode, vertical leftward mode, and horizontal upward mode), and a 16*16 luminance block and an 8*8 luminance block each have only four prediction modes (DC, horizontal, vertical, and plane).

H.265 luminance component intra-frame prediction supports prediction units (Prediction Unit, PU) of five sizes: 4*4, 8*8, 16*16, 32*32, and 64*64. A PU of each size corresponds to 35 prediction modes, including a planar mode, a DC mode, and 33 angle modes. For a chrominance component, sizes of supported PUs are 4*4/8*8/16*16/32*32, and there are five modes in total: a planar mode, a vertical mode, a horizontal mode, a DC mode, and a prediction mode corresponding to a luminance component. If the prediction mode corresponding to luminance is one of the first four modes, the prediction mode corresponding to luminance is replaced with a mode 34 in angle prediction. When an intra-frame prediction mode is selected, for all block sizes, a prediction block (prediction block, PB) size is the same as a coding block (coding block, CB) size. For a smallest CB size, there is a flag used to indicate whether the CB is divided into four PBs, and each PB has its own intra-frame prediction mode. In this segmentation mode, an intra-frame prediction mode can be selected for a 4*4 block. When an intra-frame prediction mode for luminance is used for processing by using a 4*4 block, intra-frame prediction for chrominance also uses a 4*4 block.

A same template is used in all prediction modes, and H.265 additionally uses boundary pixels of a lower left block as reference for a current block compared to H.264. This is because a macroblock of a fixed size is used as a unit for encoding in H.264, and when intra-frame prediction is performed on a current block, a lower left block of the current block may not be encoded and cannot be used for reference, but a quadtree coding structure of H.265 makes this area available pixels.

In H.265, the 35 prediction modes are defined on a PU basis, but a specific intra-frame prediction process is implemented on a transform unit (transform unit, TU) basis. H.265 specifies that a PU may be divided into TUs in a form of a quadtree, and all TUs in a PU share a same prediction mode.

The intra-frame prediction process of H.265 may include the following three steps:

(1) Obtaining adjacent reference pixels

A size of a current TU is N*N, and reference pixels of the TU may be divided into five regions, including a lower left region, a left region, an upper left region, an upper region, and an upper right region, and a total of 4*N+1 points. If the current TU is located at an image boundary, a slice boundary, or a tile boundary, an adjacent reference pixel may not exist or may not be available. In addition, in some cases, a lower left block or an upper right block probably has not been encoded, and in this case, these reference pixels are also unavailable. When a pixel is absent or unavailable, H.265 specifies that a nearest pixel may be used for filling. For example, if a lower left reference pixel does not exist, all reference pixels in the lower left region may be filled with a lowest pixel in the left region; if a reference pixel in the upper right region does not exist, a rightmost pixel in the upper region may be used for filling. It should be noted that if all reference pixels are unavailable, the reference pixels are filled with a fixed value. For an 8-bit pixel, the predictor is 128, and for a 10-bit pixel, the predictor is 512.

(2) Filtering reference pixels

In H.264, reference pixels in some modes are filtered during intra-frame prediction, so as to make better use of correlation between adjacent pixels and improve prediction accuracy. In H.265, this method continues to be used and is expanded in the following two aspects: First, different quantities of modes are selected for TUs of different sizes to perform filtering; and second, a strong filtering method is added for use.

(3) Calculating predicted pixels

Calculating predicted pixels is to obtain predicted pixel values in different calculation manners for different prediction modes.

1. Inter-frame prediction technology

Inter-frame prediction is to predict pixels of a current image by using a time-domain correlation of a video and using pixels of a neighboring encoded image, so as to achieve a purpose of effectively removing time-domain redundancy of the video. Because a video sequence generally includes a relatively strong time-domain correlation, a prediction residual value is close to 0. A residual signal is used as an input of a subsequent module to perform transform, quantization, scanning, and entropy encoding, so that efficient compression of a video signal can be implemented.

Currently, a block-based motion compensation technology is used in inter-frame prediction parts of all main video coding standards. A basic principle of the block-based motion compensation technology is searching for a best matching block in a previously encoded image for each pixel block of a current image as a reference block, and the process is referred to as motion estimation (Motion Estimation, ME). An image used for prediction is referred to as a reference image, a displacement from the reference block to a current pixel block is referred to as a motion vector (Motion Vector, MV), and a difference between the current pixel block and the reference block is referred to as a prediction residual (Prediction Residual). A residual signal is used as an input of a subsequent module to perform transform, quantization, scanning, and entropy encoding, so that efficient compression of a video signal can be implemented. According to the motion vector MV, corresponding displacement is performed on a motion displacement block image of a last frame (or several previous frames or several following frames) to obtain a motion prediction estimation value of a current block of a current frame. In this way, an inter-frame prediction frame of the current frame can be obtained. This process is referred to as motion compensation (Motion Compensation, MC).

The motion vector obtained through motion estimation is not only used for motion compensation, but also transferred to a decoder. The decoder may obtain a predicted image that is exactly the same as that on an encoder side by performing motion compensation based on the motion vector, thereby implementing correct image decoding.

There are many similarities between intra-frame prediction and inter-frame prediction. Reference pixels used for intra-frame prediction are derived from encoded pixel values of a current frame, and reference pixels used for inter-frame prediction are derived from a last encoded frame (or several previous frames or several following frames that are encoded). In inter-frame prediction, the encoder needs to transmit the motion vector MV to the decoder side, and the decoder side may obtain, based on the motion vector, a prediction block that is exactly the same as that on the encoder side. In the intra-frame coding mode, the encoder needs to transmit actually used intra-frame prediction mode information to the decoder, and the decoder side may obtain, based on the prediction mode information, an intra-frame prediction block that is exactly the same as that of the encoder. The inter-frame motion vector and the intra-frame prediction mode information are both represented in macroblock headers by using specific syntax elements.

In the inter-frame prediction coding process, most important operations are motion estimation ME, MV prediction, multi-reference-frame prediction, and weighted prediction.

Motion estimation ME is a process of extracting motion information of a current image. In motion estimation, common motion representations mainly include a pixel-based motion representation, a region-based motion representation, and a block-based motion representation.

A purpose of motion estimation is to search the reference image for a best matching block for the current block, and therefore a criterion is required to determine a degree of matching between the two blocks. Common matching criteria mainly include a minimum mean square error (Mean Square Error, MSE), a minimum mean absolute difference (Mean Absolute Difference, MAD), a maximum matching-pixel count (Matching-Pixel Count, MPC), and the like.

Commonly used algorithms for searching for a reference block include a full search algorithm, a two-dimensional log search algorithm, a three-step search algorithm, and the like. The full search algorithm is to calculate a matching error of two blocks for all possible locations in the search window. An MV corresponding to an obtained minimum matching error needs to be a globally optimal MV. However, the full search algorithm has extremely high complexity and cannot satisfy real-time coding. In addition to the full search algorithm, other algorithms are collectively referred to as fast search algorithm. The fast search algorithm has an advantage of speediness, but a search process of the fast search algorithm tends to fall into a local optimal point, and fails to find a global optimal point. To avoid this phenomenon, more points need to be searched for in each step of the search algorithm. Related algorithms include the UMHexagonS algorithm in a JM and the TZSearch algorithm in an HM.

In most images and videos, a moving object may cover a plurality of motion compensation blocks. Therefore, motion vectors of adjacent blocks in space domain are strongly correlated. If an adjacent encoded block is used to predict an MV of a current block, and a difference between the two is encoded, a quantity of bits required for encoding the MV is greatly reduced. In addition, because motion of an object has continuity, there is a specific correlation between MVs of adjacent images at a same location. In H.264, two MV prediction manners are used: space domain and time domain.

In H.265, to make full use of MVs of adjacent blocks in space domain and time domain to predict an MV of a current block, so as to reduce a quantity of bits required for encoding the MV, two new technologies in terms of MV prediction are proposed: a Merge technology and an AMVP (Advanced Motion Vector Prediction) technology.

In the Merge mode, an MV candidate list is created for a current PU, and five candidate MVs and corresponding reference images exist in the list. The five candidate MVs are traversed, a rate-distortion cost is calculated, and a candidate MV with the lowest rate-distortion cost is finally selected as an optimal MV in the Merge mode. If an encoder side and a decoder side create the candidate list in the same manner, the encoder only needs to transmit an index of the optimal MV in the candidate list. In this way, a quantity of bits required for encoding motion information is greatly reduced. The MV candidate list created in the Merge mode includes two cases: space domain and time domain, and a combination of lists is included for B Slice.

In AMVP, a candidate prediction MV list is created for a current PU by using a correlation between motion vectors in space domain and time domain. An encoder selects an optimal prediction MV from the list, and performs differential coding on the MV. A decoder side creates the same list, and may calculate an MV of a current PU by using only a motion vector residual (MVD) and a sequence number of the prediction MV in the list. Similar to the candidate MV list in the Merge mode, the candidate MV list in AMVP also includes two cases: space domain and time domain. A difference is that a length of the list in AMVP is only 2.

In addition, the motion vector is not only applied to the inter-frame prediction technology, and in the intra-frame prediction mode, a motion search may be performed to obtain a motion vector of a current to-be-encoded block based on a specific search range. In Chinese patents CN105556971A and CN105247871A, an encoder side determining manner for block flip and jump modes in intra-frame block replication prediction is disclosed, where a motion search may be performed within a current frame, so as to obtain a motion vector of a current to-be-encoded block.

In currently commonly used video standards, when encoding and prediction are performed on an image block, only two-dimensional motion of an object is considered, which is quite different from an actual application scenario. Due to a change of a camera angle, a movement of an object itself, or the like, a to-be-encoded object may be deformed, resulting in a large prediction residual and low compression performance.

## SUMMARY

According to an embodiment of a first aspect of the present invention, a video data decoding method is disclosed, and the method includes: receiving a bitstream; parsing the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; obtaining predictors of the current to-be-decoded image block based on the prediction information of the current to-be-decoded image block; obtaining reconstructed pixel values of pixels of the current to-be-decoded image block based on the predictors of the current to-be-decoded image block and the residual data of the current to-be-decoded image block; and performing spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

The embodiment of the first aspect of the present invention discloses a video data decoding method, and deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

In this embodiment of the present invention, an apparatus that receives the bitstream may be a decoder, or may be another apparatus including a decoding function, such as a mobile phone, a television, a computer, a set-top box, or a chip. The foregoing apparatus may receive the bitstream by using a receiver, or may transmit a bitstream by using a component inside the apparatus. The bitstream may be received in a wired network manner, for example, by using an optical fiber or a cable, or the bitstream may be received in a wireless network manner, for example, by using Bluetooth, Wi-Fi, or a wireless communications network (GSM, CMDA, WCDMA, LTE, or the like).

The bitstream in this embodiment of the present invention may be a data stream formed after encoding and encapsulation are performed according to generic coding standards, or may be a data stream formed after encoding and encapsulation are performed according to another proprietary coding protocol. When an encoder and a decoder belong to different components of a same apparatus, the bitstream may alternatively be an encoded data stream, and in this case, probably no encapsulation is performed. The generic coding standards may include those video compression technologies described in standards defined by MPEG-2, MPEG-4, ITU-TH.263, ITU-T H.264/MPEG-4 Part 10 advanced video coding (AVC), digital audio video coding standard (Audio Video Coding Standard, AVS), AVS2, ITU-T H.265 high efficiency video coding (HEVC) and extensions of the standards, and may also include improved technologies for the above standards. The proprietary coding protocol may include a video coding protocol such as VP8/VP9 of Google.

The current to-be-decoded image block in this embodiment of the present invention may be a to-be-reconstructed image block obtained after an image is divided in a decoding manner corresponding to an encoding manner of the bitstream. The to-be-decoded image block may be a square image block, may be a rectangular image block, or may be an image block of another form. A size of the to-be-decoded image block may be 4x4, 8x8, 16x16, 32x32, 16x32, 8x16 pixels, or the like.

The prediction information in this embodiment of the present invention may be used to indicate whether a prediction mode is intra-frame prediction or inter-frame prediction, and may further be used to indicate a specific intra-frame prediction mode or inter-frame prediction mode. For a description of the prediction mode, refer to a related part in the background. Details are not described herein again.

In a possible implementation of this embodiment of the present invention, the prediction information indicates an intra-frame prediction mode of an encoder side, and a decoder side obtains the predictors based on the prediction information. For the intra-frame prediction mode, refer to an intra-frame prediction mode specified in ITU-T H.264 and ITU-T H.265, or refer to a prediction mode specified in another standard or a proprietary protocol.

ITU-T H.264 is used as an example. A syntax of the prediction information is "rem_intra4x4_pred_mode", "rem_intra8x8_pred_mode", "intra_chroma_pred_mode", or the like.

ITU-T H.265 is used as an example. A syntax of the prediction information is "rem_intra_luma_pred_mode", "intra_chroma_pred_mode", or the like.

In a possible implementation of this embodiment of the present invention, the prediction information includes a motion vector, and the decoder side obtains the predictors based on the motion vector. The predictors may be pixel values of a reference image block. This mode is mainly used in a case in which the encoder side uses an inter-frame prediction technology to perform encoding. For the inter-frame prediction mode, refer to an inter-frame prediction mode specified in ITU-T H.264 and ITU-T H.265, or refer to a prediction mode specified in another standard or a proprietary protocol.

ITU-T H.264 is used as an example. A syntax of the prediction information is "ref_idx_10", "ref_idx_11", or the like.

ITU-T H.265 is used as an example. A syntax of the prediction information is "merge_flag", "inter_pred_idc", or the like.

In a possible implementation of this embodiment of the present invention, the motion vector may also be used in an intra-frame prediction technology. In this case, motion searching may be performed in a current decoded frame to obtain the predictors of the current to-be-decoded block. For a specific manner of obtaining the predictors, refer to the description in the background or another processing manner in the prior art. Details are not described herein again.

In addition, in actual encoding and decoding processing, an intra-frame prediction technology and an inter-frame prediction technology may be used simultaneously. For specific processing, refer to related processing in the prior art. Details are not described herein again.

The pixel value transformation mode identifier in this embodiment of the present invention may include an identifier that is used to indicate whether spatial transformation is performed on pixel values of the current to-be-decoded image block. For example, the pixel value transformation mode identifier may include a flag of one bit. When a value of the flag is 1, it indicates that spatial transformation needs to be performed on the pixel values of the current to-be-decoded image block, and the pixel value transformation mode identifier is further parsed to obtain a pixel value transformation mode of the current to-be-decoded image block. When a value of the flag is 0, it indicates that there is no need to perform spatial transformation on the pixel values of the current to-be-decoded image block. In this case, the current to-be-decoded image block may be restored according to related processing in the prior art, for example, related provisions in the foregoing ITU-T H.265 and ITU-T H.264.

In a possible implementation of this embodiment of the present invention, the pixel value transformation mode may be directly obtained by parsing the pixel value transformation mode identifier. In another possible implementation of this embodiment of the present invention, the pixel value transformation mode identifier may be parsed to obtain an index value of the pixel value transformation mode, and the pixel value transformation mode of the current to-be-decoded image block may be obtained based on a correspondence that is between the index value and the pixel value transformation mode and that is stored on the decoder side.

In a possible implementation of this embodiment of the present invention, the decoder side stores a correspondence table between an index value and a pixel value transformation mode.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In an example, the rotation transformation mode is used to implement angle transformation of coordinates of pixels of an image block relative to an origin of a coordinate system.

In an example, the symmetric transformation mode is used to implement symmetric transformation of coordinates of pixels of an image block relative to a coordinate axis of a coordinate system.

In an example, the transpose transformation mode is used to implement symmetric transformation of coordinates of pixels of an image block relative to an origin of a coordinate system.

In a possible implementation of this embodiment of the present invention, the pixel value transformation mode may also include a mode obtained after the foregoing transformation modes are combined.

In a possible implementation of this embodiment of the present invention, the pixel value transformation mode may include at least one of the following: clockwise rotation of 90 degrees, clockwise rotation of 180 degrees, clockwise rotation of -90 degrees (counterclockwise rotation of 90 degrees), transposition, transposition and clockwise rotation of 90 degrees, transposition and clockwise rotation of 180 degrees, or transposition and clockwise rotation of -90 degrees.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

In an example, a quantity of bits of an index value is 3, and a correspondence between an index value and a pixel value transformation mode is shown in the following table:

**Table 1**

| Index value | Pixel transformation mode |
| --- | --- |
| 000 | Clockwise rotation of 90 degrees |
| 001 | Clockwise rotation of 180 degrees |
| 010 | Clockwise rotation of -90 degrees |
| 011 | Transposition |
| 100 | Transposition and clockwise rotation of 90 degrees |
| 101 | Transposition and clockwise rotation of 180 degrees |
| 110 | Transposition and clockwise rotation of -90 degrees |

In a possible implementation of this embodiment of the present invention, the pixel value transformation mode is used to change pixel location coordinates in a coordinate system of the pixels of the image block to obtain the transformed pixel values of the image block. The pixel coordinate system of the image block may be constructed by using a center of the image block as an origin, using a horizontal direction as the x-axis, and using a vertical direction as the y-axis. Alternatively, the pixel coordinate system of the image block is constructed by using a pixel in an upper left corner of the image block as an origin, using a horizontal direction as the x-axis, and using a vertical direction as the y-axis. The foregoing two coordinate system construction manners are merely examples provided to help understand this embodiment of the present invention, and are not a limitation on this embodiment of the present invention.

In a possible implementation of this embodiment of the present invention, in the pixel value transformation mode, a transformation matrix may be used to implement pixel value spatial transformation. The transformation matrix may be used to perform coordinate transformation on a matrix formed by pixel coordinates of an image block. One transformation matrix may correspond to one pixel location transformation manner.

In a possible implementation of this embodiment of the present invention, a value of a determinant of the transformation matrix is not equal to 0. The transformation matrix may be decomposed into a plurality of matrices, and a value of a determinant of each submatrix obtained after decomposition is not equal to 0. If a value of a determinant of a matrix is not 0, it indicates that the matrix is invertible. In this case, it can be ensured that coordinates of pixels before and after transformation may be in a one-to-one correspondence, so as to avoid transforming coordinates of a plurality of pixel locations before transformation to same locations.

In a possible implementation of this embodiment of the present invention, the transformation matrix includes at least one of the following matrices: a rotation transformation matrix, a symmetric transformation matrix, or a transpose transformation matrix. The rotation transformation mode, the symmetric transformation mode, or the transpose transformation mode may be implemented by using a corresponding transformation matrix.

Any one of the foregoing matrices may be used to transform the to-be-decoded image block, or a matrix formed by a combination of the foregoing matrices may be used.

The rotation transformation matrix is used to implement angle transformation of coordinates of pixels of an image block relative to an origin of a coordinate system. In an example, the rotation transformation matrix is a two-dimensional matrix, for example, the rotation transformation matrix may be $\begin{bmatrix} cosA & sinA \\ -sinA & cosA \end{bmatrix}$, where A is an angle at which a pixel rotates clockwise with respect to an origin of a coordinate system. It may be understood that the foregoing matrix is merely an example helping understand this embodiment of the present invention, and the rotation transformation matrix may also be equivalent deformation of the foregoing matrix.

In an example, a pixel location is rotated in the following manner:

$$\begin{bmatrix} X1 \\ Y1 \end{bmatrix} = \begin{bmatrix} cosA & sinA \\ -sinA & cosA \end{bmatrix} \begin{bmatrix} X0 \\ Y0 \end{bmatrix},$$

where (X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle at which the pixel rotates clockwise.

The symmetric transformation matrix is used to implement horizontal axisymmetric transformation of coordinates of pixels of an image block, or implement vertical symmetric transformation of coordinates of pixels of an image block. In an example, the symmetric transformation matrix is a two-dimensional matrix, for example, the symmetric transformation matrix may be $\begin{bmatrix} 1 & 0 \\ 0 & -1 \end{bmatrix}$ (horizontal axisymmetric) or $\begin{bmatrix} -1 & 0 \\ 0 & 1 \end{bmatrix}$ (vertical axisymmetric). The foregoing matrix is merely an example helping understand this embodiment of the present invention, and the axisymmetric transformation matrix may also be equivalent deformation of the foregoing matrix.

In an example, symmetric transformation is performed on a pixel location in the following manner:

$$\begin{bmatrix} X1 \\ Y1 \end{bmatrix} = \begin{bmatrix} 1 & 0 \\ 0 & -1 \end{bmatrix} \begin{bmatrix} X0 \\ Y0 \end{bmatrix};$$

or

$$\begin{bmatrix} X1 \\ Y1 \end{bmatrix} = \begin{bmatrix} -1 & 0 \\ 0 & -1 \end{bmatrix} \begin{bmatrix} X0 \\ Y0 \end{bmatrix},$$

where (X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

The transpose transformation matrix is used to implement symmetric transformation of coordinates of pixels of an image block relative to an origin of a coordinate system. In an example, the transpose transformation matrix is a two-dimensional matrix, for example, the transpose matrix may be $\begin{bmatrix} -1 & 0 \\ 0 & -1 \end{bmatrix}$. The foregoing matrix is merely an example helping understand this embodiment of the present invention, and the transpose matrix may also be equivalent deformation of the foregoing matrix.

In an example, a pixel location is transposed in the following manner:

$$\begin{bmatrix} X1 \\ Y1 \end{bmatrix} = \begin{bmatrix} -1 & 0 \\ 0 & -1 \end{bmatrix} \begin{bmatrix} X0 \\ Y0 \end{bmatrix},$$

where (X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, the pixel value transformation mode may implement pixel value spatial transformation in a form of a transformation function, and the transformation function may include a pixel location rotation function, a pixel location symmetric transformation function, or a pixel location transposition function.

Any one of the foregoing functions may be used to transform the to-be-decoded image block, or a function formed by a combination of the foregoing functions may be used.

In a possible implementation of this embodiment of the present invention, pixel location rotation includes clockwise rotation or counterclockwise rotation. For example, a pixel location may be rotated clockwise by 90 degrees, or the pixel location may be rotated counterclockwise by 180 degrees.

In a possible implementation of this embodiment of the present invention, the pixel location is rotated according to the following formula:

$$X1 = X0 \times \cos A + Y0 \times \sin A;$$

and

$$Y1 = Y0 \times \cos A - X0 \times \sin A,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle of clockwise rotation. It may be understood that the foregoing function is merely an example used to help understand this embodiment of the present invention. This embodiment of the present invention may further include equivalent deformation of the foregoing function.

In a possible implementation of this embodiment of the present invention, symmetric transformation is performed on the pixel location according to the following formula:

$$X1 = X0, \text{ and } Y1 = -Y0 \text{ (horizontal axisymmetric); or } X1 = -X0, \text{ and } Y1 = Y0 \text{ (vertical axisymmetric),}$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. It may be understood that the foregoing function is merely an example used to help understand this embodiment of the present invention. This embodiment of the present invention may further include equivalent deformation of the foregoing function.

In a possible implementation of this embodiment of the present invention, the pixel location is transposed according to the following formula:

$$X1 = -X0, \text{ and } Y1 = -Y0,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. It may be understood that the foregoing function is merely an example used to help understand this embodiment of the present invention. This embodiment of the present invention may further include equivalent deformation of the foregoing function.

It may be understood that, for the spatial transformation of a pixel location described in this embodiment of the present invention, there is no need to move an actual location of a pixel, but the pixel value corresponding to coordinates before transformation are assigned to transformed coordinates in a pixel value coordinate system.

According to the video data decoding method in this embodiment of the present invention, deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

According to an embodiment of a second aspect of the present invention, a video data decoding method is disclosed, and the method includes: receiving a bitstream; parsing the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; obtaining predictors of the current to-be-decoded image block based on the prediction information of the current to-be-decoded image block; performing spatial transformation on the predictors of the current to-be-decoded image block according to the pixel value transformation mode corresponding to the transformation mode identifier of the current to-be-decoded image block, to obtain transformed predictors of the current to-be-decoded image block; and obtaining reconstructed pixel values of pixels of the current to-be-decoded image block based on the transformed predictors of the current to-be-decoded image block and the residual data of the current to-be-decoded image block.

The embodiment of the second aspect of the present invention discloses a video data decoding method, and deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

In a possible implementation of the embodiment of the second aspect of the present invention, the prediction information includes a motion vector of the current to-be-decoded image block, and correspondingly, the obtaining predictors of the current to-be-decoded image block based on prediction mode information of the current to-be-decoded image block includes: obtaining the predictors of the current to-be-decoded image block based on the motion vector of the current to-be-decoded image block.

In a possible implementation of the embodiment of the second aspect of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of the embodiment of the second aspect of the present invention, the rotation transformation mode is used to indicate an angle change of a pixel location in the image block in space domain.

In a possible implementation of the embodiment of the second aspect of the present invention, the symmetric transformation mode includes horizontal axisymmetric transformation or vertical axisymmetric transformation.

For a specific example of performing predictor location transformation, refer to the processing manner in the embodiment of the first aspect of the present invention.

A main difference between the embodiment of the second aspect and the embodiment of the first aspect lies in that objects executed in the pixel value transformation mode are different, and a better gain may be obtained by performing location transformation on the predictors.

According to an embodiment of a third aspect of the present invention, a video data decoding method is disclosed, and the method includes: receiving a bitstream; parsing the bitstream to obtain residual data of a current to-be-decoded image block, prediction information of the current to-be-decoded image block, and a residual transformation mode identifier of the current to-be-decoded block, where the residual transformation mode identifier is used to indicate a residual data transformation mode of the image block, and the residual data transformation mode is used to indicate a change manner of residual data in space domain; obtaining predictors of the current to-be-decoded image block based on the prediction information of the current to-be-decoded image block; transforming the residual data of the current to-be-decoded image block according to the residual data transformation mode corresponding to the residual transformation mode identifier of the current to-be-decoded image block, to obtain transformed residual data of the current to-be-decoded image block; and obtaining reconstructed pixel values of the current to-be-decoded image block based on the predictors of the current to-be-decoded image block and the transformed residual data of the current to-be-decoded image block.

In a possible implementation of the embodiment of the third aspect of the present invention, the prediction information includes a motion vector of the current to-be-decoded image block, and correspondingly, the obtaining predictors of the current to-be-decoded image block based on prediction mode information of the current to-be-decoded image block includes: obtaining the predictors of the current to-be-decoded image block based on the motion vector of the current to-be-decoded image block.

In a possible implementation of the embodiment of the third aspect of the present invention, the residual transformation mode is one mode or a combination of a plurality of modes in the following transformation mode set, and the transformation mode set includes a rotation transformation mode, a symmetric transformation mode, and a transpose transformation mode.

In a possible implementation of the embodiment of the third aspect of the present invention, the rotation transformation mode is used to indicate an angle change of the residual data in space domain.

In a possible implementation of the embodiment of the third aspect of the present invention, the symmetric transformation mode includes horizontal axisymmetric transformation or vertical axisymmetric transformation.

For a specific example of performing residual data transformation, refer to the processing manner in the embodiment of the first aspect of the present invention.

According to an embodiment of a fourth aspect of the present invention, a video data encoding method is disclosed, and the method includes: obtaining a current to-be-encoded image frame; performing image block division on the current to-be-encoded image frame to obtain a current to-be-encoded image block; performing prediction processing on the current to-be-encoded image block to obtain a candidate predictor of the current to-be-encoded image block; performing spatial transformation on pixel values of the current to-be-encoded image block to obtain a transformed image block; performing prediction processing on the transformed image block to obtain a candidate predictor of the transformed image block; obtaining a rate-distortion cost of the candidate predictor of the current to-be-encoded image block and a rate-distortion cost of the candidate predictor of the transformed image block according to a rate-distortion optimization method; obtaining a predictor of the current to-be-encoded image block based on the rate-distortion costs, where the predictor of the current to-be-encoded image block is a candidate predictor corresponding to a smallest rate-distortion cost of all the rate-distortion costs; and encoding the current to-be-encoded image block based on the predictor of the current to-be-encoded image block to generate a bitstream.

According to the video data encoding method in this embodiment of the present invention, code blocks and prediction blocks may have a plurality of shapes. A pixel location between a code block and a prediction block may be transformed. When pixel prediction is performed by using this method, deformation and motion of an object are considered comprehensively, which is more suitable for an actual application scenario. Compared with the prior art in which only an original prediction block is compared, the method can implement more accurate pixel matching, minimize a prediction residual, and obtain a better compression effect.

The current to-be-encoded image block in this embodiment of the present invention may be an image block obtained after an image is divided in a preset encoding manner. The to-be-encoded image block may be a square image block, may be a rectangular image block, or may be an image block of another form. A size of the to-be-encoded image block may be 4x4, 8x8, 16x16, 32x32, 16x32, 8x16 pixels, or the like.

Residual data in this embodiment of the present invention is mainly used to reflect a difference between an image pixel value and a predictor of a code block. During predictive coding of video data, data information of a previously encoded frame or image block needs to be used to predict a current to-be-encoded frame. A predictor is obtained through prediction. The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image.

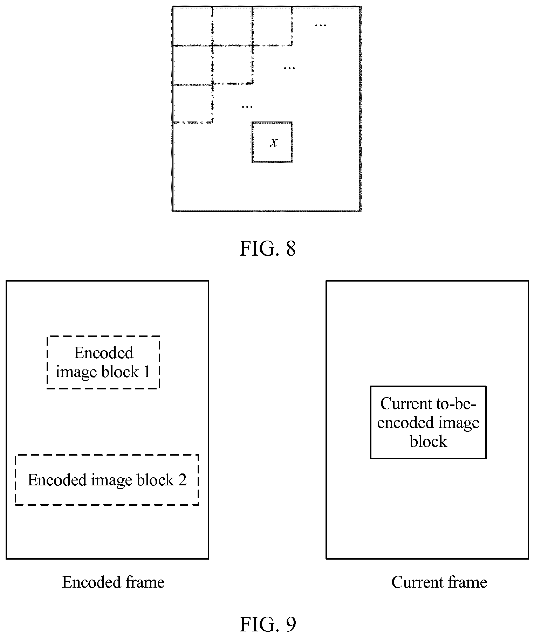

An embodiment of the present invention discloses a motion search method in an intra-frame prediction scenario. In an example, as shown in FIG. 8, within a given reference range, an encoded image block on the left of the current to-be-encoded image block X and an encoded image block above the current to-be-encoded image block X are used as reference blocks of the current to-be-encoded image block. For each pixel prediction mode, all reference blocks are traversed within the search range as candidate predictors. In the current example, the current to-be-encoded block is a square block. If a rotation, symmetric transformation, or transposition operation is performed on the current to-be-encoded block, a result after the operation is still a square block, and traversal division in each pixel prediction mode has the same form.

An embodiment of the present invention further discloses a motion search method in an inter-frame prediction scenario. In an example, as shown in FIG. 9, for the current to-be-encoded image block in a current frame image, within a given reference range, the encoded image block 2 identified by a dashed line in the encoded frame image is used as a reference block of the current to-be-encoded image block. For each pixel prediction mode, all reference blocks are traversed within the search range as candidate predictors.

In an example, the current to-be-encoded image block is a rectangular block, and a shape of the rotated rectangle may be different from a shape before rotation. In this case, the encoded image block 1 may be determined as a reference block of the current to-be-encoded image block.

In this embodiment of the present invention, during motion estimation, in addition to an existing common prediction mode, prediction modes obtained after pixel location transformation need to be compared, so as to select an optimal prediction mode. Because an operation such as rotation or transposition performed on each candidate predictor according to the pixel value transformation mode results in calculation redundancy and an increase in complexity, in an embodiment of the present invention, only an operation such as rotation or transposition is performed on the current to-be-encoded image block according to the pixel value transformation mode. In this way, in an entire motion estimation process, only one operation is performed on the current to-be-encoded image block for each pixel value transformation mode, thereby greatly reducing calculation complexity.

In a possible implementation of this embodiment of the present invention, the obtaining a predictor of the current to-be-encoded image block based on the rate-distortion costs includes:

traversing all candidate predictors in each pixel prediction mode, using a rate-distortion optimization method to perform mode selection, and selecting a prediction mode with a smallest rate-distortion cost as an optimal prediction mode; or

traversing all candidate predictors in each pixel prediction mode, performing prediction mode rate-distortion optimization on prediction results, and selecting a prediction mode with a smallest cost as an optimal prediction mode; or

traversing all candidate predictors in each pixel prediction mode, approximating bit rate costs of prediction results to obtain a plurality of candidate prediction modes, traversing all the candidate prediction modes, performing prediction mode rate-distortion optimization on the prediction results, and selecting a prediction mode with a smallest cost as an optimal prediction mode; and

after the optimal prediction mode is determined, using a candidate predictor in the prediction mode as the predictor of the to-be-encoded image block.

In the prior art, when determining an optimal predictor, an encoder side usually uses a rate-distortion optimization method:

$$cost = B + \lambda \cdot D$$

To be specific, a smallest combined value of a prediction residual cost and a motion vector cost is calculated, and rate-distortion minimum values of all candidate predictors are compared to determine the optimal predictor. B represents a prediction residual cost, and is usually calculated by using a sum of absolute differences (sum of absolute differences, SAD); D represents a motion cost; cost represents a rate-distortion cost; and $\lambda$ represents a rate-distortion coefficient.

Considering a cost caused by an operation corresponding to the pixel value transformation mode, the rate-distortion optimization cost calculation method in this embodiment of the present invention may be as follows:

$$cost = B + R + \lambda \cdot D,$$

where

cost represents a rate-distortion cost; B represents a prediction residual cost, and is usually calculated by using an SAD; D represents a motion cost, and is a quantity of bits required for transmitting a motion vector; R represents a transformation mode cost, and is used to represent an operation cost of a pixel value transformation mode; and $\lambda$ is a rate-distortion coefficient. When the motion vector is not used in intra-frame prediction, the motion cost is 0. In an example, a method for calculating an operation cost of a pixel value transformation mode is as follows:

| Index value | 000 | 001 | 010 | 011 | 100 | 101 | 110 |
|---|---|---|---|---|---|---|---|
| R | $2N^2$ | $4N^2$ | $2N^2$ | $N^2$ | $3N^2$ | $5N^2$ | $3N^2$ |

R represents a transformation mode cost, N represents a size of a current to-be-encoded square image block, and different index values correspond to different transformation modes (for a correspondence between an index value and a transformation mode, refer to an example in the embodiment of the first aspect).

In an example of the present invention, for a value of the rate-distortion coefficient $\lambda$, refer to a practice in the existing ITU-T H.265 standard, and a calculation formula is as follows:

$$\lambda = \sqrt{0.85 \times 2^{(QP-12)/3}},$$

where

QP represents a quantization parameter.

In an embodiment of the present invention, an SAD may be used to quickly measure a bit rate cost of a reference candidate predictor, that is, a degree of matching between a candidate predictor and a code block. First, a sum of absolute values of differences between pixels is calculated, and an SAD threshold $TH_{SAD}$ is set for each image block size. When a bit rate cost of a candidate predictor is greater than a corresponding threshold, the candidate predictor may be discarded. Finally, a plurality of candidate modes may be obtained. The selection of the SAD threshold needs to ensure that a candidate predictor with a relatively poor matching degree is quickly discarded, and a relatively large quantity of candidate predictors need to be retained, so as to avoid incorrect discarding and avoid a large error. In an embodiment, for SAD thresholds corresponding to different image block sizes, refer to the following settings:

| Size | $4 \times 4$ | $8 \times 8$ | $16 \times 16$ | $32 \times 32$ | $64 \times 64$ |
|---|---|---|---|---|---|
| $TH_{SAD}$ | 16 | 64 | 256 | 1024 | 4096 |

In an embodiment of the present invention, residual data is calculated according to the optimal prediction mode and a corresponding motion vector by using the current to-be-encoded image block and the predictor, and transformation, quantization, and entropy encoding are performed on the residual data to obtain encoded residual data.

In an embodiment of the present invention, for the current to-be-encoded image block, if the optimal prediction mode is not a prediction mode obtained after pixel value spatial transformation, a motion vector, residual data obtained after encoding, and the prediction mode of the current encoded object are written into a bitstream; if the optimal prediction mode is a prediction mode obtained after pixel value spatial transformation, a motion vector, residual data obtained after encoding, the prediction mode, and a pixel value transformation mode of the current encoded object are written into a bitstream. In a possible implementation, the pixel value transformation mode may be directly written into the bitstream. In another possible implementation, an index of the pixel value transformation mode may be written into the bitstream.

For a specific motion search manner and an implementation method, refer to related provisions in the prior art. Details are not described herein again.

In a possible implementation of this embodiment of the present invention, the performing pixel value spatial transformation on the current to-be-encoded image block to obtain a transformed image block includes: performing pixel value spatial transformation on the current to-be-encoded image block according to a preset pixel value transformation mode to obtain the transformed image block.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

In a possible implementation of this embodiment of the present invention, in the pixel value transformation mode, a transformation matrix may be used to perform pixel value spatial transformation.

In a possible implementation of this embodiment of the present invention, a determinant of the transformation matrix is not equal to 0.

In a possible implementation of this embodiment of the present invention, the transformation matrix includes at least one of the following matrices: a rotation transformation matrix, a symmetric transformation matrix, or a transpose transformation matrix.

In a possible implementation of this embodiment of the present invention, in the pixel value transformation mode, a transformation function may be used to perform pixel value spatial transformation.

In a possible implementation of this embodiment of the present invention, the transformation function includes at least one of the following functions: a pixel location rotation function, a pixel location symmetric transformation function, or a pixel location transposition function.

In a possible implementation of this embodiment of the present invention, the pixel location is rotated according to the following formula:

$$X1 = X0 \text{ x } cosA + Y0 \text{ x } sinA;$$

and

$$Y1 = Y0 \text{ x } cosA - X0 \text{ x } sinA,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle at which the pixel rotates clockwise.

It may be understood that, when the pixel location rotation operation is performed, if the encoder side performs counterclockwise rotation, the bitstream needs to instruct the decoder side to use a clockwise rotation transformation mode. If the encoder side performs clockwise rotation, the bitstream needs to instruct the decoder side to use a counterclockwise rotation transformation mode. In this manner, the encoder side and the decoder side may use a same correspondence between an index value and a pixel value transformation mode, for example, store a same correspondence table between an index value and a pixel value transformation mode. In an example, after performing clockwise rotation of 90 degrees on the current to-be-encoded image block, the encoder side writes an index value corresponding to a transformation mode of counterclockwise rotation of 90 degrees into a bitstream.

In a possible implementation of the present invention, if the encoder side performs counterclockwise rotation, the encoder side may also write a transformation mode of counterclockwise rotation into a bitstream, and the decoder side performs an inverse transformation operation according to the obtained transformation mode. In this manner, the encoder side and the decoder side may use a same correspondence between an index value and a pixel value transformation mode. After determining the correspondence, the decoder side needs to perform a corresponding inverse transformation operation (for example, if the encoder side performs clockwise rotation of 90 degrees on an encoded image block, the decoder side needs to perform counterclockwise rotation of 90 degrees on a to-be-decoded image block). The decoder side and the encoder side may also use different correspondences between index values and pixel value transformation modes. In this case, a decoded index value directly corresponds to an inverse transformation operation of the encoder side (for example, an index value 000 may correspond to a mode of clockwise rotation of 90 degrees on the encoder side, and correspond to a mode of counterclockwise rotation of 90 degrees on the decoder side).

It may be understood that the foregoing difference between clockwise and counterclockwise is for an example in which spatial transformation is performed on a pixel location of a current to-be-encoded image block. In an embodiment in which spatial transformation is not performed on a pixel location of a current to-be-encoded image, but spatial transformation is performed on a candidate predictor, when rotation transformation is performed on a pixel location, if the encoder side performs clockwise rotation, the decoder side is instructed to perform clockwise rotation; and if the encoder side performs counterclockwise rotation, the decoder side is instructed to perform counterclockwise rotation. In this case, an index value in the bitstream may correspond to same pixel value transformation modes on the encoder side or the decoder side.

In a specific example, the encoder side performs clockwise rotation of 90 degrees, and a used formula or matrix is:

$$X1 = Y0, \text{ and } Y1 = -X0;$$

or

$$\begin{bmatrix} X1 \\ Y1 \end{bmatrix} = \begin{bmatrix} 0 & 1 \\ -1 & 0 \end{bmatrix} \begin{bmatrix} X0 \\ Y0 \end{bmatrix}.$$

If the index value written into the bitstream is 000, after the decoder side learns, through parsing, that the index value of the pixel value transformation mode is 000, a corresponding operation is as follows:

$$X1 = -Y0, \text{ and } Y1 = X0;$$

or

$$\begin{bmatrix} X1 \\ Y1 \end{bmatrix} = \begin{bmatrix} 0 & -1 \\ 1 & 0 \end{bmatrix} \begin{bmatrix} X0 \\ Y0 \end{bmatrix}.$$

In a possible implementation of this embodiment of the present invention, axisymmetric transformation is performed on the pixel location according to the following formula:

$$X1 = X0, \text{ and } Y1 = -Y0; \text{ or } X1 = -X0, \text{ and } Y1 = Y0,$$

where
(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, the pixel location is transposed according to the following formula:

$$X1 = -X0, \text{ and } Y1 = -Y0,$$

where
(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

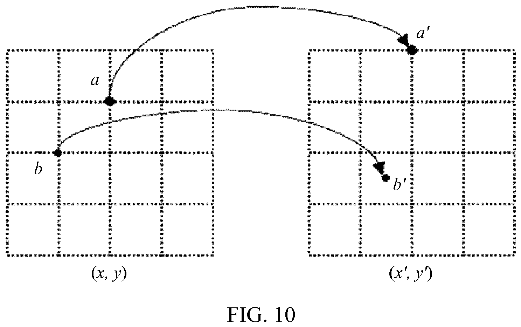

In an implementation of this embodiment of the present invention, original location coordinates of a pixel in an image block are limited to integers. After an operation such as rotation is performed, location coordinates of the pixel in the image block change. The updated location coordinates may still be integers, as shown in a pixel a' in FIG. 10, or may no longer be integers, as shown in a pixel b' in FIG. 10. A rounding operation of location information is likely to make some location coordinates have no pixel information, thereby creating a hole. To avoid this problem, a simple interpolation filter may be used to filter the image block, that is, perform weighted averaging on all pixels of the image block, so as to fill blank information in the hole, to obtain complete pixel value information of the image block.

For a specific example of performing location spatial transformation on a current to-be-encoded image block, refer to the processing manner in the embodiment of the first aspect of the present invention.

In a possible implementation of the embodiment of the fourth aspect of the present invention, the method further includes: encoding the pixel value transformation mode to obtain a pixel value transformation mode identifier, where the bitstream further includes the pixel value transformation mode identifier. For an example of the pixel value transformation mode identifier, refer to the example in the embodiment of the first aspect of the present invention.

According to an embodiment of a fifth aspect of the present invention, a video data encoding method is disclosed, and the method includes: obtaining a current to-be-encoded image frame; performing image block division on the current to-be-encoded image frame to obtain a current to-be-encoded image block; performing prediction processing on the current to-be-encoded image block to obtain a candidate predictor of the current to-be-encoded image block; performing pixel value spatial transformation on each candidate predictor to obtain a transformed candidate predictor; obtaining a rate-distortion cost of the candidate predictor and a rate-distortion cost of the transformed candidate predictor according to a rate-distortion optimization method; obtaining a predictor of the current to-be-encoded image block based on the rate-distortion costs, where the predictor of the current to-be-encoded image block is a candidate predictor or a transformed candidate predictor corresponding to a smallest rate-distortion cost of all the rate-distortion costs; and encoding the current to-be-encoded image block based on the predictor of the current to-be-encoded image block to generate a bitstream.

In a possible implementation of this embodiment of the present invention, the candidate predictor or the transformed candidate predictor corresponding to the smallest rate-distortion cost means that in all the rate-distortion costs, if the smallest rate-distortion cost corresponds to the candidate predictor, the predictor of the current to-be-encoded image block is the candidate predictor; or if the smallest rate-distortion cost corresponds to the transformed candidate predictor, the predictor of the current to-be-encoded image block is the transformed candidate predictor.

In a possible implementation of this embodiment of the present invention, if the smallest rate-distortion cost corresponds to the candidate predictor, the current to-be-encoded image block may be encoded in a manner in the prior art. The bitstream may be consistent with a bitstream in the prior art, or may include a pixel value transformation mode indication identifier, which is used to indicate that there is no need to perform spatial transformation on a pixel location for the current image block.

In a possible implementation of this embodiment of the present invention, if the smallest rate-distortion cost corresponds to the transformed candidate predictor, the pixel value transformation mode identifier needs to be encoded, and an encoded pixel value transformation mode identifier is sent to a decoder side.

In a possible implementation of this embodiment of the present invention, the performing pixel value spatial transformation on each candidate predictor to obtain a transformed candidate predictor includes:
performing pixel value spatial transformation on the candidate predictor according to a preset pixel value transformation mode, to obtain the transformed candidate predictor.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

For a description and a definition of the pixel value transformation mode in this embodiment of the present invention, refer to the description of the foregoing encoding method embodiment. Details are not described herein again.

According to the video data encoding method in this embodiment of the present invention, code blocks and prediction blocks may have a plurality of shapes. A pixel location between a code block and a prediction block may be transformed. When pixel prediction is performed by using this method, deformation and motion of an object are considered comprehensively, which is more suitable for an actual application scenario. Compared with the prior art in which only an original prediction block is compared, the method can implement more accurate pixel matching, minimize a prediction residual, and obtain a better compression effect.

According to an embodiment of a sixth aspect of the present invention, a video data decoding apparatus is disclosed, and the apparatus includes: a receiving module, configured to receive a bitstream; a parsing module, configured to parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; a prediction module, configured to obtain predictors of the current to-be-decoded image block based on the prediction information of the current to-be-decoded image block; a reconstruction module, configured to obtain reconstructed pixel values of pixels of the current to-be-decoded image block based on the predictors of the current to-be-decoded image block and the residual data of the current to-be-decoded image block; and a pixel value transformation module, configured to perform spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

According to the video data decoding apparatus in this embodiment of the present invention, deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

In a possible implementation of this embodiment of the present invention, the prediction information includes a motion vector of the current to-be-decoded image block; and the prediction module is configured to obtain the predictors of the current to-be-decoded image block based on the motion vector of the current to-be-decoded image block.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

For an implementation and a definition of a related feature of the decoding apparatus in the embodiment of the sixth aspect of the present invention, refer to the specific implementation of the decoding method in the embodiment of the first aspect of the present invention. Details are not described herein again.

According to an embodiment of a seventh aspect of the present invention, a video data decoding apparatus is disclosed, and the apparatus includes: a receiving module, configured to receive a bitstream; a parsing module, configured to parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; a prediction module, configured to obtain predictors of the current to-be-decoded image block based on the prediction information of the current to-be-decoded image block; a pixel value transformation module, configured to transform the predictors of the current to-be-decoded image block according to the pixel value transformation mode corresponding to the transformation mode identifier of the current to-be-decoded image block, to obtain transformed predictors of the current to-be-decoded image block; and a reconstruction module, configured to obtain reconstructed pixel values of pixels of the current to-be-decoded image block based on the transformed predictors of the current to-be-decoded image block and the residual data of the current to-be-decoded image block.

According to the video data decoding apparatus in this embodiment of the present invention, deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

In a possible implementation of this embodiment of the present invention, the prediction information includes a motion vector of the current to-be-decoded image block; and

the prediction module is configured to obtain the predictors of the current to-be-decoded image block based on the motion vector of the current to-be-decoded image block.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

For an implementation and a definition of a related feature of the decoding apparatus in the embodiment of the seventh aspect of the present invention, refer to the specific implementation of the decoding method in the embodiment of the second aspect of the present invention. Details are not described herein again.

According to an embodiment of an eighth aspect of the present invention, a video data encoding apparatus is disclosed, and the apparatus includes: an obtaining module, configured to obtain a current to-be-encoded image frame; an image block division module, configured to perform image block division on the current to-be-encoded image frame to obtain a current to-be-encoded image block; a prediction module, configured to perform prediction processing on the current to-be-encoded image block to obtain a candidate predictor of the current to-be-encoded image block; a transformation module, configured to perform spatial transformation on pixel values of the current to-be-encoded image block to obtain a transformed image block, where the prediction module is further configured to perform prediction processing on the transformed image block to obtain a candidate predictor of the transformed image block; a rate-distortion cost calculation module, configured to obtain a rate-distortion cost of the candidate predictor of the current to-be-encoded image block and a rate-distortion cost of the candidate predictor of the transformed image block according to a rate-distortion optimization method; a predictor obtaining module, configured to obtain a predictor of the current to-be-encoded image block based on the rate-distortion costs, where the predictor of the current to-be-encoded image block is a candidate predictor corresponding to a smallest rate-distortion cost of all the rate-distortion costs; and an encoding module, configured to encode the current to-be-encoded image block based on the predictor of the current to-be-encoded image block to generate a bitstream.

In a possible implementation of this embodiment of the present invention, the transformation module is configured to perform spatial transformation on the pixel values of the current to-be-encoded image block according to a preset pixel value transformation mode, to obtain the transformed image block.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

For an implementation and a definition of a related feature of the encoding apparatus in the embodiment of the eighth aspect of the present invention, refer to the specific implementation of the encoding method in the embodiment of the fourth aspect of the present invention. Details are not described herein again.

According to an embodiment of a ninth aspect of the present invention, a video data encoding apparatus is disclosed, and the apparatus includes: an obtaining module, configured to obtain a current to-be-encoded image frame; an image block division module, configured to perform image block division on the current to-be-encoded image frame to obtain a current to-be-encoded image block; a prediction module, configured to perform prediction processing on the current to-be-encoded image block to obtain a candidate predictor of the current to-be-encoded image block; a transformation module, configured to perform pixel value spatial transformation on each candidate predictor to obtain a transformed candidate predictor; a rate-distortion cost calculation module, configured to obtain a rate-distortion cost of the candidate predictor and a rate-distortion cost of the transformed candidate predictor according to a rate-distortion optimization method; a predictor obtaining module, configured to obtain a predictor of the current to-be-encoded image block based on the rate-distortion costs, where the predictor of the current to-be-encoded image block is a candidate predictor or a transformed candidate predictor corresponding to a smallest rate-distortion cost of all the rate-distortion costs; and an encoding module, configured to encode the current to-be-encoded image block based on the predictor of the current to-be-encoded image block to generate a bitstream.

In a possible implementation of this embodiment of the present invention, the transformation module is configured to perform pixel value spatial transformation on the candidate predictor according to a preset pixel value transformation mode, to obtain the transformed candidate predictor.

In a possible implementation of this embodiment of the present invention, the pixel value transformation mode is one mode or a combination of a plurality of modes in the following transformation mode set, and the transformation mode set includes a rotation transformation mode, a symmetric transformation mode, and a transpose transformation mode.

In a possible implementation of this embodiment of the present invention, the rotation transformation mode is used to indicate an angle change of a pixel location in the image block in space domain.

In a possible implementation of this embodiment of the present invention, the symmetric transformation mode includes horizontal axisymmetric transformation or vertical axisymmetric transformation.

For an implementation and a definition of a related feature of the encoding apparatus in the embodiment of the ninth aspect of the present invention, refer to the specific implementation of the encoding method in the embodiment of the fifth aspect of the present invention. Details are not described herein again.

According to an embodiment of a tenth aspect of the present invention, a video data decoding apparatus is disclosed, and the apparatus includes a processor and a memory, where the memory stores an executable instruction, and the executable instruction is used to instruct the processor to perform the decoding methods in the embodiments of the first aspect to the third aspect.

According to an embodiment of an eleventh aspect of the present invention, a video data encoding apparatus is disclosed, and the apparatus includes a processor and a memory, where the memory stores an executable instruction, and the executable instruction is used to instruct the processor to perform the encoding methods in the embodiment of the fourth aspect and the embodiment of the fifth aspect.

## BRIEF DESCRIPTION OF DRAWINGS

FIG. 1 is a diagram of an example of an image block according to an embodiment of the present invention;
FIG. 2 is a diagram of another example of an image block according to an embodiment of the present invention;
FIG. 3 is a diagram of another example of an image block according to an embodiment of the present invention;
FIG. 4 is a schematic diagram of rotation of a pixel location according to an embodiment of the present invention;
FIG. 5 is a schematic diagram of symmetric transformation of a pixel location according to an embodiment of the present invention;
FIG. 6 is a schematic diagram of transpose of a pixel location according to an embodiment of the present invention;
FIG. 7 is a schematic diagram of results of transforming a pixel location in a pixel block according to an embodiment of the present invention;
FIG. 8 is a schematic diagram of intra-frame motion search according to an embodiment of the present invention;
FIG. 9 is a schematic diagram of inter-frame motion search according to an embodiment of the present invention;
FIG. 10 is a schematic diagram of a rotation operation of a pixel value location according to an embodiment of the present invention;
FIG. 11 is a schematic flowchart of a video data decoding method according to an embodiment of the present invention;
FIG. 12 is a schematic flowchart of another video data decoding method according to an embodiment of the present invention;
FIG. 13 is a schematic diagram of decoding using an inter-frame prediction technology according to an embodiment of the present invention;

FIG. 14 is a schematic flowchart of another video data decoding method according to an embodiment of the present invention;

FIG. 15 is a schematic diagram of decoding using an intra-frame prediction technology according to an embodiment of the present invention;

FIG. 16 is a schematic flowchart of a video data encoding method according to an embodiment of the present invention;

FIG. 17 is a schematic flowchart of a video data decoding method according to an embodiment of the present invention;

FIG. 18 is a schematic structural diagram of a decoding apparatus according to an embodiment of the present invention;

FIG. 19 is a schematic structural diagram of another decoding apparatus according to an embodiment of the present invention;

FIG. 20 is a schematic structural diagram of another decoding apparatus according to an embodiment of the present invention;

FIG. 21 is a schematic flowchart of an encoding method according to an embodiment of the present invention;

FIG. 22 is a schematic structural diagram of an encoding apparatus according to an embodiment of the present invention;

FIG. 23 is a schematic structural diagram of another encoding apparatus according to an embodiment of the present invention;

FIG. 24 is a schematic structural diagram of another encoding apparatus according to an embodiment of the present invention; and

FIG. 25 is a diagram of another example of an image block according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

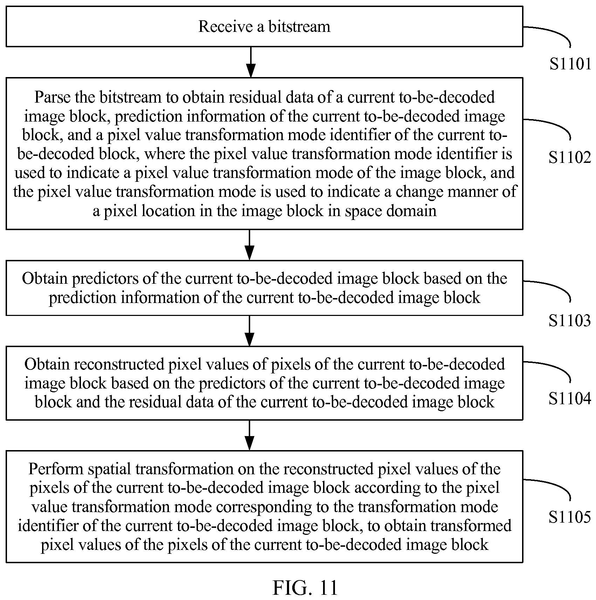

As shown in FIG. 11, an embodiment of the present invention discloses a video data decoding method. The method includes the following steps.

S1101: Receive a bitstream.

S1102: Parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain.

S1103: Obtain predictors of the current to-be-decoded image block based on the prediction information of the current to-be-decoded image block.

S1104: Obtain reconstructed pixel values of pixels of the current to-be-decoded image block based on the predictors of the current to-be-decoded image block and the residual data of the current to-be-decoded image block.

S1105: Perform spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

According to the video data decoding method in this embodiment of the present invention, deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

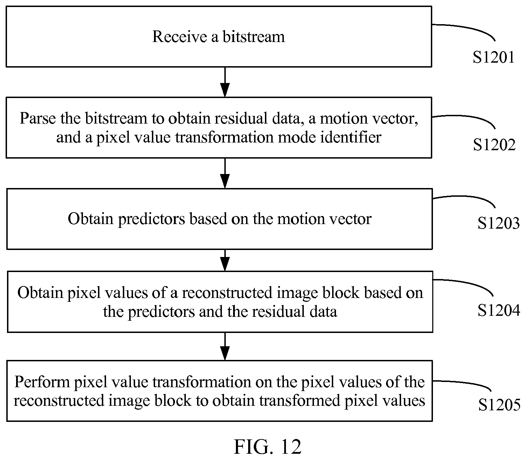

As shown in FIG. 12, an embodiment of the present invention discloses a video data decoding method. The method includes the following steps.

S1201: Receive a bitstream.

In this embodiment of the present invention, the bitstream may be received by a decoder, or may be received by another apparatus including a decoding function, such as a mobile phone, a television, a computer, a set-top box, or a chip. The foregoing apparatus may receive the bitstream by using a receiver, or may transmit a bitstream by using a component inside the apparatus. The bitstream may be received in a wired network manner, for example, by using an optical fiber or a cable, or the bitstream may be received in a wireless network manner, for example, by using Bluetooth, Wi-Fi, or a wireless communications network (GSM, CMDA, WCDMA, or the like).

The bitstream in this embodiment of the present invention may be a data stream formed after encoding and encapsulation are performed according to generic coding standards, or may be a data stream formed after encoding and encapsulation are performed according to another proprietary coding protocol. When an encoder and a decoder belong to different components of a same apparatus, the bitstream may alternatively be an encoded data stream, and in this case, probably no encapsulation is performed. The generic coding standards may include those video compression technologies described in standards defined by MPEG-2, MPEG-4, ITU-TH.263, ITU-T H.264/MPEG-4 Part 10 advanced video coding (AVC), AVS, AVS2, ITU-T H.265 high efficiency video coding (HEVC) and extensions of the standards, and may also include improved technologies for the above standards. The proprietary coding protocol may include a video coding protocol such as VP8/VP9 of Google.

S1202: Parse the bitstream to obtain residual data, a motion vector, and a pixel value transformation mode identifier.

The bitstream is parsed to obtain the residual data, the motion vector, and the pixel value transformation mode identifier of a current to-be-decoded image block.

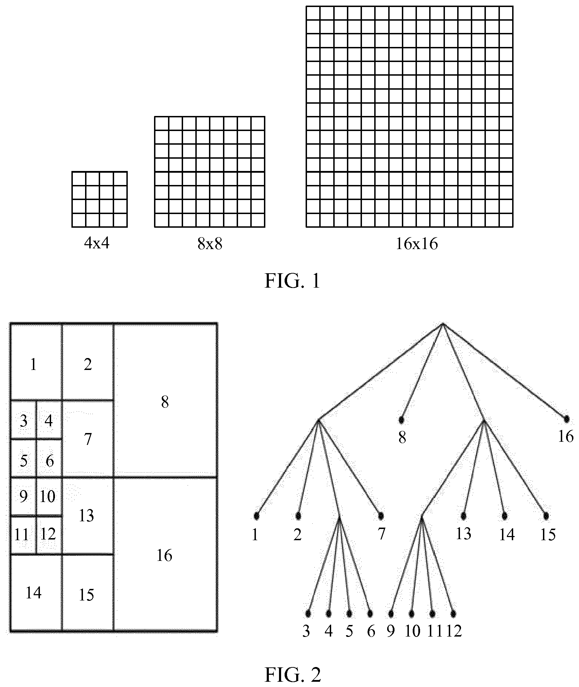

The current to-be-decoded image block in this embodiment of the present invention may be a to-be-reconstructed image block obtained after an image is divided in a decoding manner corresponding to an encoding manner of the bitstream. The to-be-decoded image block may be a square image block, may be a rectangular image block, or may be an image block of another form. A size of the to-be-decoded image block may be 4x4, 8x8, 16x16, 32x32, 16x32, 8x16 pixels, or the like. A reference example of the to-be-decoded image block may be shown in FIG. 1 to FIG. 3.

In a possible implementation of this embodiment of the present invention, the to-be-decoded image block may be divided in an image block division manner in ITU-T H.264. As shown in FIG. 1, ITU-T H.264 mainly specifies three sizes of blocks to be decoded and reconstructed: 4x4 pixels, 8x8 pixels, and 16x16 pixels.

In a possible implementation of this embodiment of the present invention, the to-be-decoded image block may be divided in an image block division manner in ITU-T H.265. Compared with ITU-T H.264, ITU-T H.265 uses larger macroblocks for coding. These macroblocks are referred to as coding tree units (coding tree unit, CTU), and sizes of the CTUs may be 16x16 pixels, 32x32 pixels, and 64x64 pixels. The CTU is converted, by using a quadtree structure, into coding units (coding unit, CU) for coding. In a prediction mode, some CUs are converted into prediction units (prediction unit, PU). During image residual transformation, the CU is converted into a transform unit (transform unit, TU) for transformation and quantization. FIG. 2 is a schematic diagram of CTU division according to a quadtree result. As shown in FIG. 2, a size of a CTU is 64x64 pixels, and the CTU is divided into 16 CUs. Sizes of a CU 8 and a CU 16 are 32x32 pixels each, sizes of CUs 1, 2, 7, 13, 14, and 15 are 16x16 pixels each, and sizes of CUs 3, 4, 5, 6, 9, 10, 11, and 12 are 4x4 pixels each. The to-be-decoded image block may be a to-be-reconstructed image block corresponding to any one of CUs 1 to 16 on a decoder side.

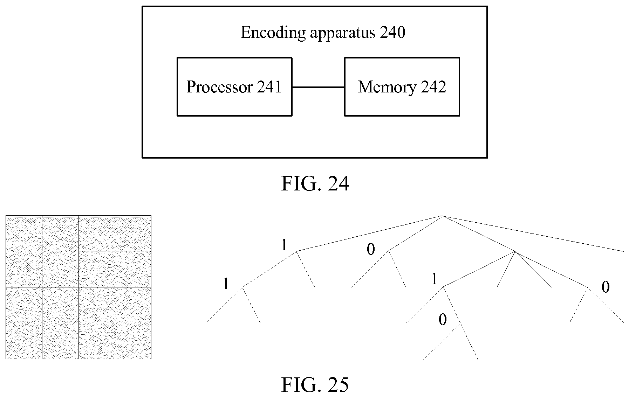

In a possible implementation of this embodiment of the present invention, an image block division manner is introduced to a joint exploration test model (joint exploration test model, JEM), and an image block may be obtained through division in a manner of quadtree plus binary tree (quadtree plus binary tree, QTBT). In a QTBT structure, a coding unit CU may be square or rectangular. A root node of a tree-like code block is first divided in a quadtree manner, and then a leaf node of the quadtree is divided in a binary-tree manner. There are two division manners for the binary tree: horizontal symmetric division and vertical symmetric division. A leaf node of the binary tree is a coding unit CU, and may be directly used for prediction and transformation without further division. FIG. 25 is a diagram of an example of QTBT division. A solid line represents quadtree division, and a dashed line represents binary-tree division. A flag may be used for each division of the binary tree to identify a division manner: 0 is horizontal division, and 1 is vertical division. For a specific processing manner of QTBT, refer to related provisions in the JVET-D1001 document (Joint Video Exploration Team (JVET) of ITU-T SG 16 WP 3 and ISO/IEC JTC 1/SC 29/WG 114th Meeting: Chengdu, CN, 15-21 October 2016).

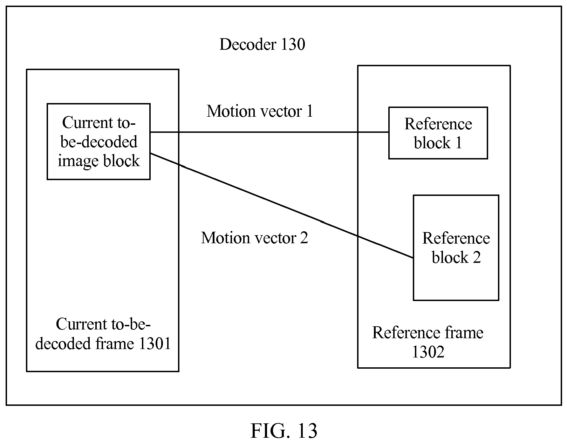

In an example, FIG. 13 is used as an example. A current to-be-decoded frame in a decoder is 1301, and a reference frame is 1302. The reference frame is usually an image frame that has been decoded and reconstructed, and may be obtained through decoding by using the decoder 130, or may be a stored image frame that has been decoded and reconstructed. The reference frame of the current to-be-decoded frame may be obtained through bitstream parsing. For a related processing manner, refer to related provisions in the prior art. Details are not described herein again.

The residual data described in this embodiment of the present invention is mainly used to reflect a difference between a predictor and an image pixel value of a to-be-encoded block or an image pixel value of a to-be-decoded block. During predictive coding of video data, data information of a previously encoded frame or image block needs to be used to predict a current to-be-encoded frame. A predictor is obtained through prediction. The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image.

In an example, after bitstream parsing, an expression form of residual data corresponding to a reference block 1 in FIG. 13 may be as follows:

**Table 2**

| 0 | 1 | -1 | 0 | 0 | -1 | 0 | 0 |
|---|---|---|---|---|---|---|---|
| -1 | 2 | 0 | 0 | 0 | 1 | 0 | 0 |
| -2 | 1 | 0 | 0 | 0 | 1 | 2 | 2 |
| 0 | 0 | 1 | 1 | 1 | 2 | 0 | 0 |

In an example, after bitstream parsing, an expression form of residual data corresponding to a reference block 2 in FIG. 13 may be as follows:

**Table 3**

| 0 | -1 | -2 | 0 |
|---|---|---|---|
| 1 | 2 | 1 | 0 |
| -1 | 0 | 0 | 1 |
| 0 | 0 | 0 | 1 |
| 0 | 0 | 0 | 1 |
| -1 | 1 | 1 | 2 |
| 0 | 0 | 2 | 0 |
| 0 | 0 | 2 | 0 |

It may be understood that the foregoing expression forms are only examples given in order to help understand this embodiment of the present invention, but set no limitation on this embodiment of the present invention.

For a related definition of the motion vector, refer to descriptions of the background and the summary. Details are not described herein again. In an example, FIG. 13 shows two different motion vectors. The motion vector 1 corresponds to an example in which pixel value transformation processing is not performed, and the motion vector 2 corresponds to an example in which pixel value transformation processing is performed.

The pixel value transformation mode identifier may include an identifier that is used to indicate whether spatial transformation is performed on pixel values of the current to-be-decoded image block. For example, the pixel value transformation mode identifier may include a flag of one bit. When a value of the flag is 1, it indicates that spatial transformation needs to be performed on the pixel values of the current to-be-decoded image block, and the pixel value transformation mode identifier is further parsed to obtain a pixel value transformation mode of the current to-be-decoded image block.

In a possible implementation of this embodiment of the present invention, the pixel value transformation mode may be directly obtained by parsing the pixel value transformation mode identifier. In another possible implementation of this embodiment of the present invention, the pixel value transformation mode identifier may be parsed to obtain an index value of the pixel value transformation mode, and the pixel value transformation mode of the current to-be-decoded image block may be obtained based on a correspondence that is between the index value and the pixel value transformation mode and that is stored on the decoder side.

In a possible implementation of this embodiment of the present invention, the decoder side stores a correspondence table between an index value and a pixel value transformation mode.

S1203: Obtain predictors based on the motion vector.

The predictors of the current to-be-decoded image block are determined in the reference frame based on the motion vector obtained through bitstream parsing. As shown in FIG. 13, if the motion vector of the current to-be-decoded image block that is obtained through bitstream parsing is the motion vector 1, the motion vector corresponds to the reference block 1, and the predictors may be pixel values of the reference block 1. If the motion vector of the current to-be-decoded image block that is obtained through bitstream parsing is the motion vector 2, the motion vector corresponds to the reference block 2, and the predictors may be pixel values of the reference block 2. It may be understood that the motion vector 1 and the motion vector 2 shown in FIG. 13 are merely an example helping understand the present invention. In an actual decoding process, the current to-be-decoded image block may correspond to only one motion vector. In the example of FIG. 10, the reference block 1 is an image block with 8x4 pixels, and the reference block 2 is an image block with 4x8 pixels. In an actual decoding process, the current to-be-decoded image block may correspond to only one piece of residual data.

It may be understood that the bitstream may further include other prediction mode information that is used to indicate a prediction mode of the current to-be-decoded image block, and a reference image block may be obtained based on both the prediction mode and the motion vector.

For a specific manner of obtaining the reference image block based on the motion vector, refer to descriptions of the background and the summary, or another manner in the prior art may be used. Details are not described herein again.

In an example, the pixel values of the reference block 1 are as follows:

**Table 4**

| 6 | 10 | 1 | 8 | 2 | 3 | 0 | 0 |
|---|----|---|---|---|---|---|---|
| 8 | 12 | 0 | 8 | 3 | 5 | 0 | 0 |
| 7 | 7  | 0 | 9 | 3 | 5 | 2 | 2 |
| 3 | 3  | 3 | 3 | 3 | 2 | 2 | 2 |

In an example, the pixel values of the reference block 2 are as follows:

**Table 5**

| 6  | 8  | 7 | 3 |
|----|----|---|---|
| 10 | 12 | 7 | 3 |
| 1  | 0  | 0 | 3 |
| 8  | 8  | 9 | 3 |
| 2  | 3  | 3 | 3 |
| 3  | 5  | 5 | 2 |
| 0  | 0  | 2 | 2 |
| 0  | 0  | 2 | 2 |

S1204: Obtain pixel values of a reconstructed image block based on the predictors and the residual data.

In a possible implementation of this embodiment of the present invention, values of the residual data and the predictors may be directly added together to obtain the pixel values of the reconstructed image block.

In a possible implementation of this embodiment of the present invention, interpolation calculation may be performed on values of the residual data and the predictors to obtain the pixel values of the reconstructed image block.

In a possible implementation of this embodiment of the present invention, a mathematical operation (for example, weighting calculation) may be first performed on values of the residual data or the predictors, and then the pixel values of the reconstructed image are obtained based on a result of the mathematical operation.

In a possible implementation of this embodiment of the present invention, it may be further determined, according to the pixel value transformation mode identifier, whether to perform an operation of S1205 after the operation of S1204.

In an example, the pixel value transformation mode identifier includes an indicator of one bit. When the value of the indicator is 1, it indicates that spatial transformation needs to be performed on pixel values of pixels of the reconstructed image block. When the value of the indicator is 0, it indicates that there is no need to perform spatial transformation on pixel values of pixels of the reconstructed image block. In this case, pixel values of the current to-be-decoded image block are the pixel values of the reconstructed image block, and may be used for subsequent processing, for example, for displaying a reconstructed image on a screen.

In an example, the reference block of the current to-be-decoded image block is the reference block 1, and the reference block 1 is an image block with 8x4 pixels. If the value of the indicator in the pixel value transformation mode identifier is 0, it indicates that there is no need to perform pixel value mode transformation. In this case, the current to-be-decoded image block is an 8x4 image block. The pixel values are as follows (the values of the residual data and the pixel values of the reference image block are added together directly):

**Table 6**

| 6 | 11 | 0 | 8 | 2 | 2 | 0 | 0 |
|---|----|---|---|---|---|---|---|
| 7 | 14 | 0 | 8 | 3 | 6 | 0 | 0 |
| 5 | 8 | 0 | 9 | 3 | 6 | 4 | 4 |
| 3 | 3 | 4 | 4 | 4 | 4 | 2 | 2 |

In an example, the reference block of the current to-be-decoded image block is the reference block 2, the reference block 2 is an image block with 4x8 pixels, and the pixel values of the reconstructed image block are as follows (the values of the residual data and the pixel values of the reference image block are directly added together):

**Table 7**

| 6 | 7 | 5 | 3 |
|---|---|---|---|
| 11 | 14 | 8 | 3 |
| 0 | 0 | 0 | 4 |
| 8 | 8 | 9 | 4 |
| 2 | 3 | 3 | 4 |
| 2 | 6 | 6 | 4 |
| 0 | 0 | 4 | 2 |
| 0 | 0 | 4 | 2 |

S1205: Perform pixel value transformation on the pixel values of the reconstructed image block to obtain transformed pixel values.

In a possible implementation of this embodiment of the present invention, the pixel value transformation mode is used to change pixel location coordinates in a coordinate system of the pixels of the reconstructed image block to obtain the transformed pixel values of the reconstructed image block. The pixel coordinate system of the image block may be constructed by using a center of the image block as an origin, using a horizontal direction as the x-axis, and using a vertical direction as the y-axis. Alternatively, the pixel coordinate system of the image block is constructed by using a pixel in an upper left corner of the image block as an origin, using a horizontal direction as the x-axis, and using a vertical direction as the y-axis. The foregoing two coordinate system construction manners are merely examples provided to help understand this embodiment of the present invention, and are not a limitation on this embodiment of the present invention.

In a possible implementation of this embodiment of the present invention, in the pixel value transformation mode, a transformation matrix may be used to perform spatial transformation on a pixel location. The transformation matrix is used to perform coordinate transformation on a matrix formed by pixel values of an image block. One transformation matrix may correspond to one pixel location transformation manner.

In a possible implementation of this embodiment of the present invention, a value of a determinant of the transformation matrix is not equal to 0. The transformation matrix may be decomposed into a plurality of matrices, and a value of a determinant of each submatrix obtained after decomposition is not equal to 0. If a value of a determinant of a matrix is not 0, it indicates that the matrix is invertible. In this case, it can be ensured that coordinates of pixels before and after transformation may be in a one-to-one correspondence, so as to avoid transforming coordinates of a plurality of pixel locations before transformation to same locations.

In a possible implementation of this embodiment of the present invention, the transformation matrix includes at least one of the following matrices: a rotation transformation matrix, a symmetric transformation matrix, or a transpose transformation matrix.

Any one of the foregoing matrices may be used to transform the reconstructed image block, or a matrix formed by a combination of the foregoing matrices may be used.

The rotation transformation matrix is used to implement angle transformation of coordinates of pixels of an image block relative to an origin of a coordinate system. In an example, the rotation transformation matrix is a two-dimensional matrix, for example, the rotation transformation matrix may be $\begin{bmatrix} \cos A & \sin A \\ -\sin A & \cos A \end{bmatrix}$, where A is an angle at which a pixel rotates clockwise with respect to an origin of a coordinate system. It may be understood that the foregoing matrix is merely an example helping understand this embodiment of the present invention, and the rotation transformation matrix may also be equivalent deformation of the foregoing matrix.

In an example, a pixel location is rotated in the following manner:

$$\begin{bmatrix} X1 \\ Y1 \end{bmatrix} = \begin{bmatrix} \cos A & \sin A \\ -\sin A & \cos A \end{bmatrix} \begin{bmatrix} X0 \\ Y0 \end{bmatrix},$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle at which the pixel rotates clockwise.

In an example, after the pixel values of the reconstructed image block that are obtained based on the reference block 2 are rotated clockwise by 90 degrees, an obtained reconstructed image block is an 8x4 image block, and transformed pixel values of the reconstructed image block are as follows:

**Table 8**

| 0 | 0 | 2 | 2 | 8 | 0 | 11 | 6 |
|---|---|---|---|---|---|----|---|
| 0 | 0 | 6 | 3 | 8 | 0 | 14 | 7 |
| 4 | 4 | 6 | 3 | 9 | 0 | 8  | 5 |
| 2 | 2 | 4 | 4 | 4 | 4 | 3  | 3 |

The symmetric transformation matrix is used to implement horizontal axisymmetric transformation of coordinates of pixels of an image block, or implement vertical symmetric transformation of coordinates of pixels of an image block. In an example, the symmetric transformation matrix is a two-dimensional matrix, for example, the symmetric transformation matrix may be $\begin{bmatrix} 1 & 0 \\ 0 & -1 \end{bmatrix}$ (horizontal axisymmetric) or $\begin{bmatrix} -1 & 0 \\ 0 & 1 \end{bmatrix}$ (vertical axisymmetric). The foregoing matrix is merely an example helping understand this embodiment of the present invention, and the axisymmetric transformation matrix may also be equivalent deformation of the foregoing matrix.

In an example, symmetric transformation is performed on a pixel location in the following manner:

$$\begin{bmatrix} X1 \\ Y1 \end{bmatrix} = \begin{bmatrix} 1 & 0 \\ 0 & -1 \end{bmatrix} \begin{bmatrix} X0 \\ Y0 \end{bmatrix};$$

or

$$\begin{bmatrix} X1 \\ Y1 \end{bmatrix} = \begin{bmatrix} -1 & 0 \\ 0 & -1 \end{bmatrix} \begin{bmatrix} X0 \\ Y0 \end{bmatrix},$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In an example, horizontal axisymmetric transformation is performed on the pixel values of the reconstructed image block that are obtained based on the reference block 2, a transformed reconstructed image block is a 4x8 image block, and transformed pixel values of the reconstructed image block are as follows:

**Table 9**

| | | | |
|---|---|---|---|
| 0 | 0 | 4 | 2 |
| 0 | 0 | 4 | 2 |
| 2 | 6 | 6 | 4 |
| 2 | 3 | 3 | 4 |
| 8 | 8 | 9 | 4 |
| 0 | 0 | 0 | 4 |
| 11 | 14 | 8 | 3 |
| 6 | 7 | 5 | 3 |

In an example, vertical axisymmetric transformation is performed on the pixel values of the reconstructed image block that are obtained based on the reference block 2, a transformed reconstructed image block is a 4x8 image block, and transformed pixel values of the reconstructed image block are as follows:

**Table 10**

| | | | |
|---|---|---|---|
| 3 | 5 | 7 | 6 |
| 3 | 8 | 14 | 11 |
| 4 | 0 | 0 | 0 |
| 4 | 9 | 8 | 8 |
| 4 | 3 | 3 | 2 |
| 4 | 6 | 6 | 2 |
| 2 | 4 | 0 | 0 |
| 2 | 4 | 0 | 0 |

The transpose transformation matrix is used to implement symmetric transformation of coordinates of pixels of an image block relative to an origin of a coordinate system. In an example, the transpose transformation matrix is a two-dimensional matrix, for example, the transpose matrix may be $\begin{bmatrix} -1 & 0 \\ 0 & -1 \end{bmatrix}$. The foregoing matrix is merely an example helping understand this embodiment of the present invention, and the transpose matrix may also be equivalent deformation of the foregoing matrix.

In an example, a pixel location is transposed in the following manner:

$$\begin{bmatrix} X1 \\ Y1 \end{bmatrix} = \begin{bmatrix} -1 & 0 \\ 0 & -1 \end{bmatrix} \begin{bmatrix} X0 \\ Y0 \end{bmatrix},$$

where
(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In an example, the pixel values of the reconstructed image block that are obtained based on the reference block 2 are transposed, a transposed reconstructed image block is a 4x8 image block, and transformed pixel values of the reconstructed image block are as follows:

**Table 11**

| | | | |
|---|---|---|---|
| 2 | 4 | 0 | 0 |
| 2 | 4 | 0 | 0 |
| 4 | 6 | 6 | 2 |

(continued)

| 4 | 3 | 3 | 2 |
|---|---|---|---|
| 4 | 9 | 8 | 8 |
| 4 | 0 | 0 | 0 |
| 3 | 8 | 14 | 11 |
| 3 | 5 | 7 | 6 |

In a possible implementation of this embodiment of the present invention, in the pixel value transformation mode, a transformation function may be used to perform spatial transformation on a pixel location.

In a possible implementation of this embodiment of the present invention, the transformation function described in this embodiment of the present invention includes at least one of the following functions: pixel location rotation, pixel location axisymmetric transformation, or pixel location transposition.

Any one of the foregoing functions may be used to transform the to-be-decoded image block, or a function formed by a combination of the foregoing functions may be used.

In a possible implementation of this embodiment of the present invention, pixel location rotation includes clockwise rotation or counterclockwise rotation. For example, a pixel location may be rotated clockwise by 90 degrees, or the pixel location may be rotated counterclockwise by 180 degrees.

In a possible implementation of this embodiment of the present invention, the pixel location is rotated according to the following formula:

$$X1 = X0 \times cosA + Y0 \times sinA;$$

and

$$Y1 = Y0 \times cosA - X0 \times sinA,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle of clockwise rotation.

In a possible implementation of this embodiment of the present invention, axisymmetric transformation is performed on the pixel location according to the following formula:

$$X1 = X0, \text{ and } Y1 = -Y0 \text{ (horizontal axisymmetric); or } X1 = -X0, \text{ and } Y1 =$$

$$Y0 \text{ (vertical axisymmetric),}$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, the pixel location is transposed according to the following formula:

$$X1 = -X0, \text{ and } Y1 = -Y0,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

It may be understood that when the reference image block is a square block, for example, when the reference image block is 4x4, 8x8, or 16x16, an image block obtained after the pixel values of the reconstructed image block are transformed is still a square block, and only pixel values corresponding to different coordinates may change.

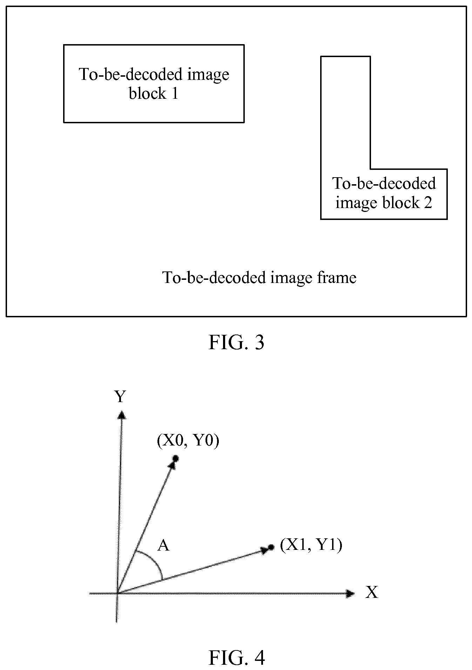

FIG. 4 to FIG. 6 are schematic diagrams in which pixel location rotation, pixel location axisymmetric transformation, and pixel location transposition are performed for an image block according to embodiments of the present invention.

As shown in FIG. 4, after a pixel value of coordinates (X0, Y0) is rotated clockwise by A degrees, a pixel value of a rotated pixel is the same as that before rotation, and corresponding location coordinates are (X1, Y1).

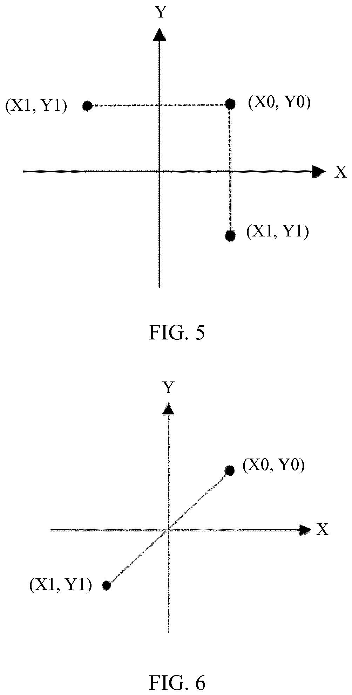

As shown in FIG. 5, after axisymmetric transformation is performed on a pixel value of coordinates (X0, Y0), a pixel value of a transformed pixel is the same as that before transformation, and corresponding location coordinates are (X1, Y1). (X1, Y1) on the left side of the figure is a result of vertical axisymmetric transformation, and (X1, Y1) on the right side is a result of horizontal axisymmetric transformation.

As shown in FIG. 6, after a pixel value of coordinates (X0, Y0) is transposed, a pixel value of a transposed pixel is the same as that before transposition, and corresponding location coordinates are (X1, Y1).

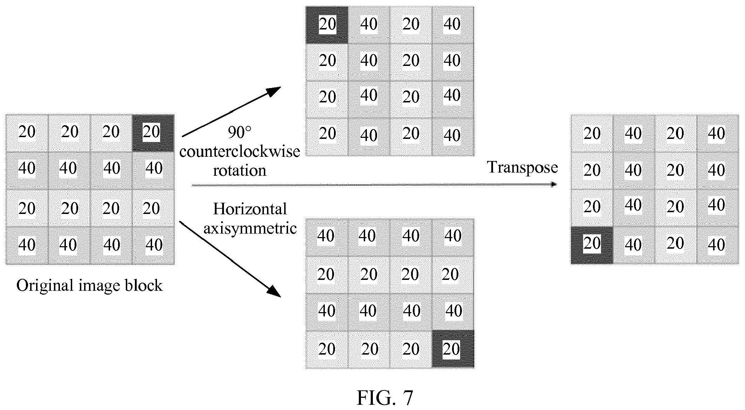

FIG. 7 is a schematic diagram of results obtained after pixel location rotation, pixel location axisymmetric transformation, and pixel location transposition are performed for an image block according to an embodiment of the present invention. As shown in FIG. 7, a pixel (a dark black part in the figure) in an upper right corner of an original image block is used as an example, and a pixel value in the upper right corner is 20. If the original image block is rotated counterclockwise by 90 degrees, a result is shown in the upper-middle diagram in FIG. 7. In this case, the pixel value in the upper right corner is transformed to the upper-left corner, and a pixel value in an upper-right corner of the rotated image block is 40 (corresponding to a pixel value in a lower-right corner of the original image block). If a horizontal axisymmetric operation is performed on the original image block, the pixel value in the upper right corner is transformed to a lower right corner, a pixel value in an upper right corner of the image block obtained after the horizontal axisymmetric transformation is 40 (corresponding to a pixel value of a pixel in a lower right corner of the original image block), and a result of the transformation is shown in the lower-middle diagram in FIG. 7. If a transposition operation is performed on the original image block, the pixel value in the upper right corner is transformed to a lower left corner, a pixel value in an upper right corner of the image block obtained after the transposition is 40 (corresponding to a pixel value of a pixel in a lower left corner of the original image block), and a result of the transformation is shown in the rightmost diagram in FIG. 7.

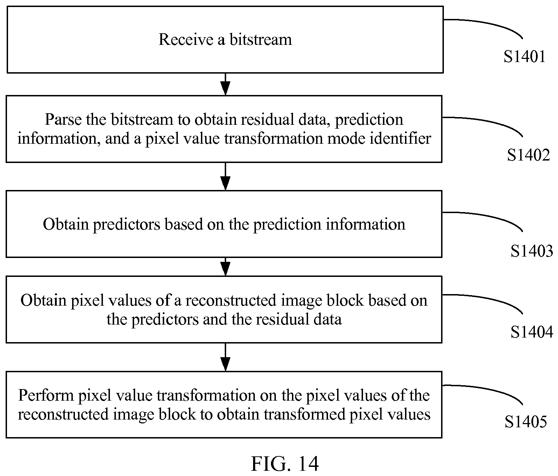

As shown in FIG. 14, an embodiment of the present invention discloses a video data decoding method. The method includes the following steps.

S1401: Receive a bitstream.

In this embodiment of the present invention, the bitstream may be received by a decoder, or may be received by another apparatus including a decoding function, such as a mobile phone, a television, a computer, a set-top box, or a chip. The foregoing apparatus may receive the bitstream by using a receiver, or may transmit a bitstream by using a component inside the apparatus. The bitstream may be received in a wired network manner, for example, by using an optical fiber or a cable, or the bitstream may be received in a wireless network manner, for example, by using Bluetooth, Wi-Fi, or a wireless communications network (GSM, CMDA, WCDMA, or the like).

The bitstream in this embodiment of the present invention may be a data stream formed after encoding and encapsulation are performed according to generic coding standards, or may be a data stream formed after encoding and encapsulation are performed according to another proprietary coding protocol. When an encoder and a decoder belong to different components of a same apparatus, the bitstream may alternatively be an encoded data stream, and in this case, probably no encapsulation is performed. The generic coding standards may include those video compression technologies described in standards defined by MPEG-2, MPEG-4, ITU-TH.263, ITU-T H.264/MPEG-4 Part 10 advanced video coding (AVC), AVS, AVS2, ITU-T H.265 high efficiency video coding (HEVC) and extensions of the standards, and may also include improved technologies for the above standards. The proprietary coding protocol may include a video coding protocol such as VP8/VP9 of Google.

S1402: Parse the bitstream to obtain residual data, prediction information, and a pixel value transformation mode identifier.

The bitstream is parsed to obtain the residual data, the prediction information, and the pixel value transformation mode identifier of a current to-be-decoded image block.

The current to-be-decoded image block in this embodiment of the present invention may be a to-be-reconstructed image block obtained after an image is divided in a decoding manner corresponding to an encoding manner of the bitstream. The to-be-decoded image block may be a square image block, may be a rectangular image block, or may be an image block of another form. A size of the to-be-decoded image block may be 4x4, 8x8, 16x16, 32x32, 16x32, 8x16 pixels, or the like. A reference example of the to-be-decoded image block may be shown in FIG. 1 to FIG. 3.

The residual data described in this embodiment of the present invention is mainly used to reflect a difference between a predictor and an image pixel value of a to-be-encoded block or an image pixel value of a to-be-decoded

**EP 3 591 973 A1**

block. During predictive coding of video data, data information of a previously encoded frame needs to be used to predict a current to-be-encoded frame. A predictor is obtained through prediction. The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image.

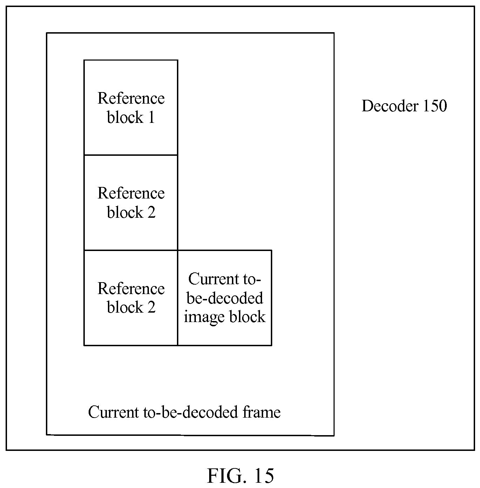

In an example, after bitstream parsing, an expression form of residual data corresponding to a reference block in FIG. 15 may be as follows:

**Table 12**

| 0 | 0 | 0 | 1 |
|---|---|---|---|
| 0 | 0 | 1 | -1 |
| 1 | 0 | 2 | -2 |
| -1 | 1 | 1 | 1 |

The prediction information is used to indicate a prediction mode of the current to-be-decoded image block. An intra-frame prediction mode is mainly used in the embodiment shown in FIG. 14. It may be understood that the bitstream may also include prediction information that is for the inter-frame prediction mode in FIG. 13 and that is used to indicate related information. For a specific description of the prediction information, refer to the background and the summary. Details are not described herein again.

S1403: Obtain predictors based on the prediction information.

The predictors of the current to-be-decoded image block are obtained based on the intra-frame prediction mode indicated by the prediction information. For a specific manner of obtaining the predictors based on the intra-frame prediction mode, refer to descriptions of the background and the summary, or another manner in the prior art may be used. Details are not described herein again.

In an example, the predictors of the current to-be-decoded image block are as follows:

**Table 13**

| 10 | 8 | 8 | 9 |
|----|---|---|---|
| 9 | 7 | 8 | 7 |
| 10 | 10 | 8 | 6 |
| 12 | 12 | 12 | 12 |

S1404: Obtain pixel values of a reconstructed image block based on the predictors and the residual data.

In a possible implementation of this embodiment of the present invention, values of the residual data and the predictors may be directly added together to obtain the pixel values of the reconstructed image block.

In a possible implementation of this embodiment of the present invention, interpolation calculation may be performed on values of the residual data and the predictors to obtain the pixel values of the reconstructed image block.

In a possible implementation of this embodiment of the present invention, a mathematical operation (for example, weighting calculation) may be first performed on values of the residual data or the predictors, and then the pixel values of the reconstructed image are obtained based on a result of the mathematical operation.

In a possible implementation of this embodiment of the present invention, it may be further determined, according to the pixel value transformation mode identifier, whether to perform an operation of S1405 after the operation of S1404.

In an example, the pixel value transformation mode identifier includes an indicator of one bit. When the value of the indicator is 1, it indicates that spatial transformation needs to be performed on pixel values of pixels of the reconstructed image block. When the value of the indicator is 0, it indicates that there is no need to perform spatial transformation on pixel values of pixels of the reconstructed image block. In this case, pixel values of the current to-be-decoded image block are the pixel values of the reconstructed image block, and may be used for subsequent processing.

In an example, the predictors of the current to-be-decoded image block are pixel values of the reference block 1, and the reference block 1 is a 4x4 pixel block. If the value of the indicator in the pixel value transformation mode identifier is 0, it indicates that there is no need to perform pixel value mode transformation. In this case, the current to-be-decoded image block is a 4x4 image block. The pixel values are as follows (the values of the residual data and the predictors are directly added together):

**Table 14**

| 10 | 8 | 8 | 10 |
|----|----|----|----|
| 9 | 7 | 9 | 6 |
| 11 | 10 | 10 | 4 |
| 11 | 13 | 13 | 13 |

S 1405: Perform pixel value transformation on the pixel values of the reconstructed image block to obtain transformed pixel values.

In a possible implementation of this embodiment of the present invention, the pixel value transformation mode is used to change pixel location coordinates in a coordinate system of the pixels of the reconstructed image block to obtain the transformed pixel values of the reconstructed image block. The pixel coordinate system of the image block may be constructed by using a center of the image block as an origin, using a horizontal direction as the x-axis, and using a vertical direction as the y-axis. Alternatively, the pixel coordinate system of the image block is constructed by using a pixel in an upper left corner of the image block as an origin, using a horizontal direction as the x-axis, and using a vertical direction as the y-axis. The foregoing two coordinate system construction manners are merely examples provided to help understand this embodiment of the present invention, and are not a limitation on this embodiment of the present invention.

In a possible implementation of this embodiment of the present invention, a transformation matrix corresponding to the pixel value transformation mode may be used to perform spatial transformation on a pixel location. The transformation matrix is used to perform coordinate transformation on a matrix formed by pixel values of an image block. One transformation matrix may correspond to one pixel location transformation manner.

In a possible implementation of this embodiment of the present invention, a value of a determinant of the transformation matrix is not equal to 0. The transformation matrix may be decomposed into a plurality of matrices, and a value of a determinant of each submatrix obtained after decomposition is not equal to 0. If a value of a determinant of a matrix is not 0, it indicates that the matrix is invertible. In this case, it can be ensured that coordinates of pixels before and after transformation may be in a one-to-one correspondence, so as to avoid transforming coordinates of a plurality of pixel locations before transformation to same locations.

In a possible implementation of this embodiment of the present invention, the transformation matrix includes at least one of the following matrices: a rotation transformation matrix, a symmetric transformation matrix, or a transpose transformation matrix.

Any one of the foregoing matrices may be used to transform the reconstructed image block, or a matrix formed by a combination of the foregoing matrices may be used.

The rotation transformation matrix is used to implement angle transformation of coordinates of pixels of an image block relative to an origin of a coordinate system. In an example, the rotation transformation matrix is a two-dimensional matrix, for example, the rotation transformation matrix may be $\begin{bmatrix} \cos A & \sin A \\ -\sin A & \cos A \end{bmatrix}$, where A is an angle at which a pixel rotates clockwise with respect to an origin of a coordinate system. It may be understood that the foregoing matrix is merely an example helping understand this embodiment of the present invention, and the rotation transformation matrix may also be equivalent deformation of the foregoing matrix.

In an example, a pixel location is rotated in the following manner:

$$\begin{bmatrix} X1 \\ Y1 \end{bmatrix} = \begin{bmatrix} cosA & sinA \\ -sinA & cosA \end{bmatrix} \begin{bmatrix} X0 \\ Y0 \end{bmatrix},$$

where
(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle at which the pixel rotates clockwise.

The symmetric transformation matrix is used to implement horizontal axisymmetric transformation of coordinates of pixels of an image block, or implement vertical symmetric transformation of coordinates of pixels of an image block. In an example, the symmetric transformation matrix is a two-dimensional matrix, for example, the symmetric transfor-

mation matrix may be $\begin{bmatrix} 1 & 0 \\ 0 & -1 \end{bmatrix}$ (horizontal axisymmetric) or $\begin{bmatrix} -1 & 0 \\ 0 & 1 \end{bmatrix}$ (vertical axisymmetric). The foregoing matrix is merely an example helping understand this embodiment of the present invention, and the axisymmetric transformation matrix may also be equivalent deformation of the foregoing matrix.

In an example, symmetric transformation is performed on a pixel location in the following manner:

$$\begin{bmatrix} X1 \\ Y1 \end{bmatrix} = \begin{bmatrix} 1 & 0 \\ 0 & -1 \end{bmatrix}\begin{bmatrix} X0 \\ Y0 \end{bmatrix};$$

or

$$\begin{bmatrix} X1 \\ Y1 \end{bmatrix} = \begin{bmatrix} -1 & 0 \\ 0 & -1 \end{bmatrix}\begin{bmatrix} X0 \\ Y0 \end{bmatrix},$$

where (X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

The transpose transformation matrix is used to implement symmetric transformation of coordinates of pixels of an image block relative to an origin of a coordinate system. In an example, the transpose transformation matrix is a two-dimensional matrix, for example, the transpose matrix may be $\begin{bmatrix} -1 & 0 \\ 0 & -1 \end{bmatrix}$. The foregoing matrix is merely an example helping understand this embodiment of the present invention, and the transpose matrix may also be equivalent deformation of the foregoing matrix.

In an example, a pixel location is transposed in the following manner:

$$\begin{bmatrix} X1 \\ Y1 \end{bmatrix} = \begin{bmatrix} -1 & 0 \\ 0 & -1 \end{bmatrix}\begin{bmatrix} X0 \\ Y0 \end{bmatrix},$$

where
(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, in the pixel value transformation mode, a transformation function may be used to perform spatial transformation on a pixel location.

In a possible implementation of this embodiment of the present invention, the transformation function described in this embodiment of the present invention includes at least one of the following functions: pixel location rotation, pixel location axisymmetric transformation, or pixel location transposition.

Any one of the foregoing functions may be used to transform the to-be-decoded image block, or a function formed by a combination of the foregoing functions may be used.

In a possible implementation of this embodiment of the present invention, pixel location rotation includes clockwise rotation or counterclockwise rotation. For example, a pixel location may be rotated clockwise by 90 degrees, or the pixel location may be rotated counterclockwise by 180 degrees.

In a possible implementation of this embodiment of the present invention, the pixel location is rotated according to the following formula:

$$X1=X0 \times cosA + Y0 \times sinA;$$

and

$$Y1=Y0 \times cosA - X0 \times sinA,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle of clockwise rotation.

In a possible implementation of this embodiment of the present invention, axisymmetric transformation is performed on the pixel location according to the following formula:

$$X1 = X0, \text{ and } Y1 = -Y0 \text{ (horizontal axisymmetric); or } X1 = -X0, \text{ and } Y1 = Y0 \text{ (vertical axisymmetric),}$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, the pixel location is transposed according to the following formula:

$$X1 = -X0, \text{ and } Y1 = -Y0,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

It may be understood that when the reference image block is a square block, for example, when the reference image block is 4x4, 8x8, or 16x16, an image block obtained after the pixel values of the reconstructed image block are transformed is still a square block, and only pixel values corresponding to different coordinates may change.

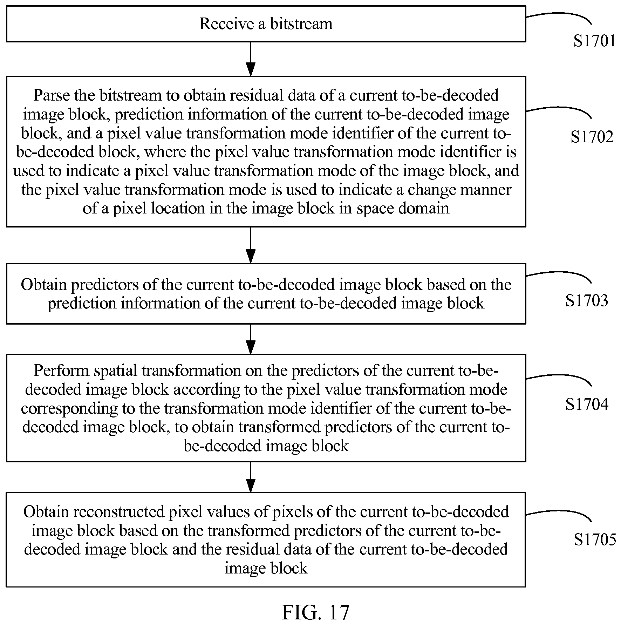

As shown in FIG. 17, an embodiment of the present invention discloses a video data decoding method. The method includes the following steps.

S1701: Receive a bitstream.

In this embodiment of the present invention, the bitstream may be received by a decoder, or may be received by another apparatus including a decoding function, such as a mobile phone, a television, a computer, a set-top box, or a chip. The foregoing apparatus may receive the bitstream by using a receiver, or may transmit a bitstream by using a component inside the apparatus. The bitstream may be received in a wired network manner, for example, by using an optical fiber or a cable, or the bitstream may be received in a wireless network manner, for example, by using Bluetooth, Wi-Fi, or a wireless communications network (GSM, CMDA, WCDMA, or the like).

The bitstream in this embodiment of the present invention may be a data stream formed after encoding and encapsulation are performed according to generic coding standards, or may be a data stream formed after encoding and encapsulation are performed according to another proprietary coding protocol. When an encoder and a decoder belong to different components of a same apparatus, the bitstream may alternatively be an encoded data stream, and in this case, probably no encapsulation is performed. The generic coding standards may include those video compression technologies described in standards defined by MPEG-2, MPEG-4, ITU-T H.263, ITU-T H.264/MPEG-4 Part 10 advanced video coding (AVC), AVS, AVS2, ITU-T H.265 high efficiency video coding (HEVC) and extensions of the standards, and may also include improved technologies for the above standards. The proprietary coding protocol may include a video coding protocol such as VP8/VP9 of Google.

S1702: Parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain.

The current to-be-decoded image block in this embodiment of the present invention may be a to-be-reconstructed image block obtained after an image is divided in a decoding manner corresponding to an encoding manner of the bitstream. The to-be-decoded image block may be a square image block, may be a rectangular image block, or may be an image block of another form. A size of the to-be-decoded image block may be 4x4, 8x8, 16x16, 32x32, 16x32, 8x16 pixels, or the like. A reference example of the to-be-decoded image block may be shown in FIG. 1 to FIG. 3.

The residual data described in this embodiment of the present invention is mainly used to reflect a difference between a predictor and an image pixel value of a to-be-encoded block or an image pixel value of a to-be-decoded block. During predictive coding of video data, data information of a previously encoded frame needs to be used to predict a current to-be-encoded frame. A predictor is obtained through prediction. The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image.

In an example, after bitstream parsing, an expression form of the residual data may be as follows:

**Table 15**

| 0 | 0 | 0 | 1 |
|---|---|---|---|
| 0 | 0 | 1 | -1 |
| 1 | 0 | 2 | -2 |
| -1 | 1 | 1 | 1 |

S1703: Obtain predictors of the current to-be-decoded image block based on the prediction information of the current to-be-decoded image block.

For a specific manner of obtaining the predictors based on the prediction information, refer to related descriptions in the foregoing embodiments and the prior art. Details are not described herein again.

In an example, the predictors of the current to-be-decoded image block are as follows:

**Table 16**

| 10 | 8 | 8 | 9 |
|---|---|---|---|
| 9 | 7 | 8 | 7 |
| 10 | 10 | 8 | 6 |
| 12 | 12 | 12 | 12 |

S1704: Perform spatial transformation on the predictors of the current to-be-decoded image block according to the pixel value transformation mode corresponding to the transformation mode identifier of the current to-be-decoded image block, to obtain transformed predictors of the current to-be-decoded image block.

For a specific manner of performing spatial transformation on the predictors of the to-be-decoded image block, refer to descriptions and examples of the pixel value transformation mode in the foregoing embodiments. Details are not described herein again.

In an example, transformed predictors obtained after the predictors of the current to-be-decoded image block are rotated clockwise by 90 degrees are as follows:

**Table 17**

| 12 | 10 | 9 | 10 |
|---|---|---|---|
| 12 | 10 | 7 | 8 |
| 12 | 8 | 8 | 8 |
| 12 | 6 | 7 | 9 |

S1705: Obtain reconstructed pixel values of pixels of the current to-be-decoded image block based on the transformed predictors of the current to-be-decoded image block and the residual data of the current to-be-decoded image block.

In a possible implementation of this embodiment of the present invention, values of the residual data and the transformed predictors may be directly added together to obtain the pixel values of the reconstructed image block.

In a possible implementation of this embodiment of the present invention, interpolation calculation may be performed on values of the residual data and the transformed predictors to obtain the pixel values of the reconstructed image block.

In a possible implementation of this embodiment of the present invention, a mathematical operation (for example, weighting calculation) may be first performed on values of the residual data or the transformed predictors, and then the pixel values of the reconstructed image are obtained based on a result of the mathematical operation.

In an example, the reconstructed pixel values of the pixels of the current to-be-decoded image block are as follows (the values of the residual data and the transformed predictors are directly added together):

**Table 18**

| 12 | 10 | 9 | 11 |
|----|----|----|----|
| 12 | 10 | 8 | 7 |
| 13 | 8 | 10 | 6 |
| 11 | 7 | 8 | 10 |

According to the video data decoding method in this embodiment of the present invention, deformation and motion of an object are considered in a pixel prediction process. In addition to the original image code block, a plurality of pixel transform image blocks are obtained based on a possible deformation feature of the image code block. Therefore, a possible deformation status of an object can be well covered. Compared with the prior art in which only an original image block is used for prediction, in this method, more accurate pixel matching can be implemented to obtain a better reference prediction image block, so that a residual in a prediction process is smaller, and a better video data presentation effect is obtained at a lower bit rate.

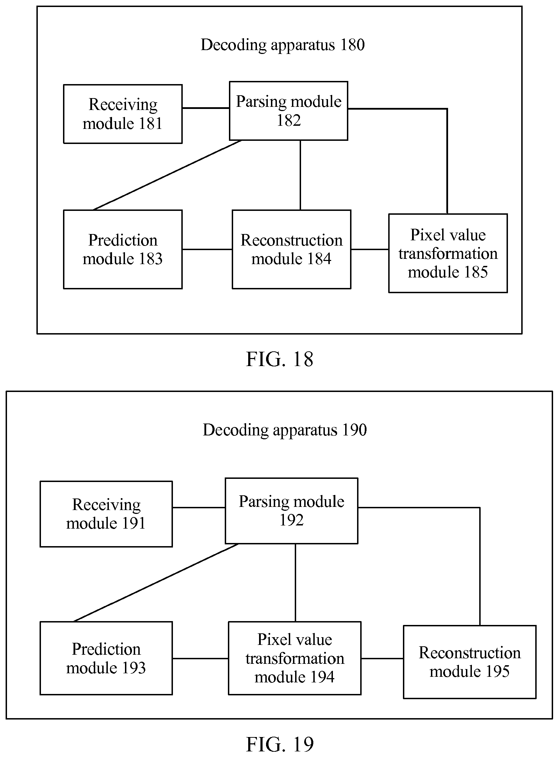

As shown in FIG. 18, an embodiment of the present invention discloses a video data decoding apparatus 180. The decoding apparatus 180 includes: a receiving module 181, configured to receive a bitstream; a parsing module 182, configured to parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; a prediction module 183, configured to obtain predictors of the current to-be-decoded image block based on the prediction information of the current to-be-decoded image block; a reconstruction module 184, configured to obtain reconstructed pixel values of pixels of the current to-be-decoded image block based on the predictors of the current to-be-decoded image block and the residual data of the current to-be-decoded image block; and a pixel value transformation module 185, configured to perform spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

As shown in FIG. 19, an embodiment of the present invention discloses a video data decoding apparatus 190. The decoding apparatus 190 includes: a receiving module 191, configured to receive a bitstream; a parsing module 192, configured to parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain; a prediction module 193, configured to obtain predictors of the current to-be-decoded image block based on the prediction information of the current to-be-decoded image block; a pixel value transformation module 194, configured to transform the predictors of the current to-be-decoded image block according to the pixel value transformation mode corresponding to the transformation mode identifier of the current to-be-decoded image block, to obtain transformed predictors of the current to-be-decoded image block; and a reconstruction module 195, configured to obtain reconstructed pixel values of pixels of the current to-be-decoded image block based on the transformed predictors of the current to-be-decoded image block and the residual data of the current to-be-decoded image block.

For specific functions of modules in the decoding apparatus 180 and the decoding apparatus 190 in the embodiments of the present invention, refer to related descriptions of the decoding method embodiment of the present invention. Details are not described herein again.

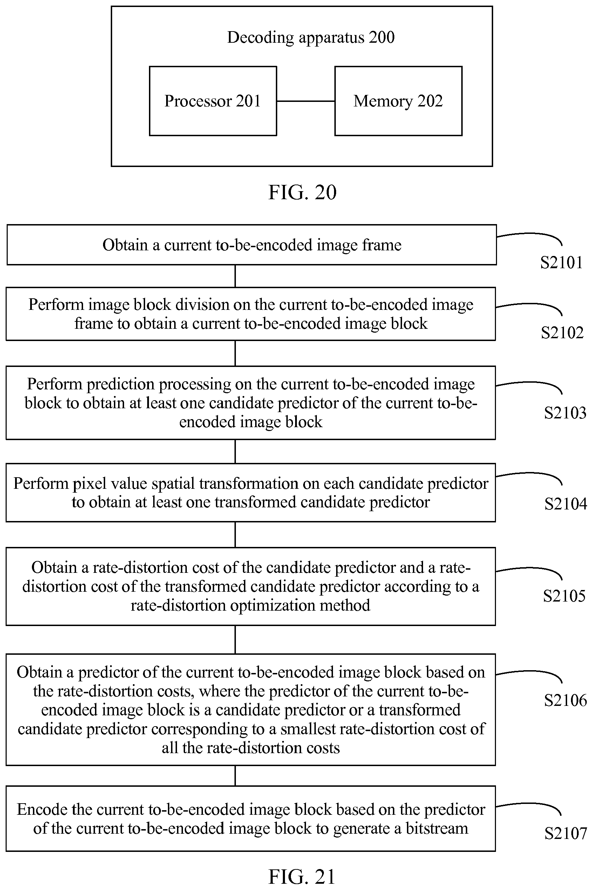

As shown in FIG. 20, an embodiment of the present invention discloses a video data decoding apparatus 200. The decoding apparatus 200 includes:

a processor 201 and a memory 202, where the memory 202 stores an executable instruction, which is used to instruct the processor 201 to perform the decoding method in the embodiment of the present invention.

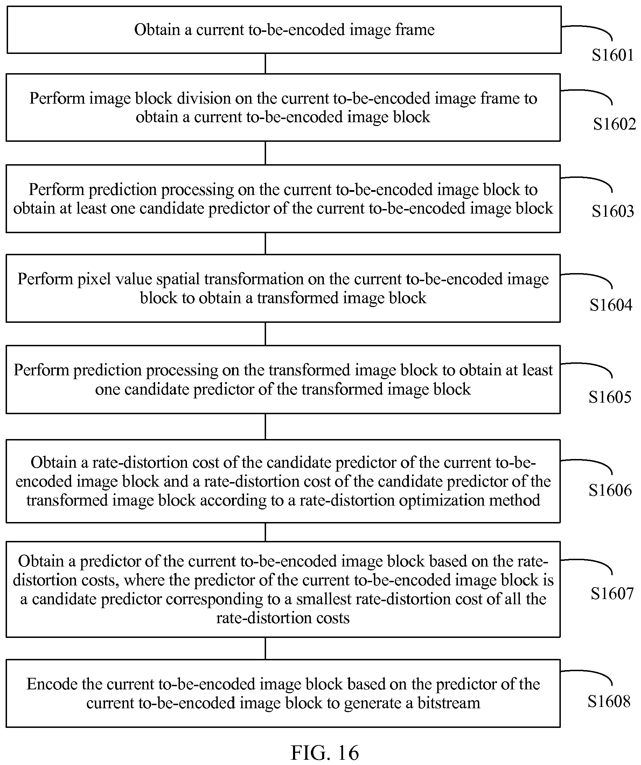

As shown in FIG. 16, an embodiment of the present invention discloses a video data encoding method. The method includes the following steps.

S1601: Obtain a current to-be-encoded image frame.

S1602: Perform image block division on the current to-be-encoded image frame to obtain a current to-be-encoded image block.

S1603: Perform prediction processing on the current to-be-encoded image block to obtain a candidate predictor of the current to-be-encoded image block.

S1604: Perform spatial transformation on pixel values of the current to-be-encoded image block to obtain a transformed image block.

S1605: Perform prediction processing on the transformed image block to obtain a candidate predictor of the transformed image block.

S1606: Obtain a rate-distortion cost of the candidate predictor of the current to-be-encoded image block and a rate-distortion cost of the candidate predictor of the transformed image block according to a rate-distortion optimization method.

S1607: Obtain a predictor of the current to-be-encoded image block based on the rate-distortion costs, where the predictor of the current to-be-encoded image block is a candidate predictor corresponding to a smallest rate-distortion cost of all the rate-distortion costs.

S1608: Encode the current to-be-encoded image block based on the predictor of the current to-be-encoded image block to generate a bitstream.

According to the video data encoding method in this embodiment of the present invention, code blocks and prediction blocks may have a plurality of shapes. A pixel location between a code block and a prediction block may be transformed. When pixel prediction is performed by using this method, deformation and motion of an object are considered comprehensively, which is more suitable for an actual application scenario. Compared with the prior art in which only an original prediction block is compared, the method can implement more accurate pixel matching, minimize a prediction residual, and obtain a better compression effect.

The current to-be-encoded image block in this embodiment of the present invention may be an image block obtained after an image is divided in a preset encoding manner. The to-be-encoded image block may be a square image block, may be a rectangular image block, or may be an image block of another form. A size of the to-be-encoded image block may be 4x4, 8x8, 16x16, 32x32, 16x32, 8x16 pixels, or the like.

In a possible implementation of this embodiment of the present invention, the to-be-encoded image block may be divided in an image block division manner in ITU-T H.264. As shown in FIG. 1, ITU-T H.264 mainly specifies three sizes of code blocks: 4x4 pixels, 8x8 pixels, and 16x16 pixels.

In a possible implementation of this embodiment of the present invention, the to-be-encoded image block may be divided in an image block division manner in ITU-T H.265. Compared with ITU-T H.264, ITU-T H.265 uses larger macroblocks for coding. These macroblocks are referred to as coding tree units (coding tree unit, CTU), and sizes of the CTUs may be 16x16 pixels, 32x32 pixels, and 64x64 pixels. The CTU is converted, by using a quadtree structure, into coding units (coding unit, CU) for coding. In a prediction mode, some CUs are converted into prediction units (prediction unit, PU). During image residual transformation, the CU is converted into a transform unit (transform unit, TU) for transformation and quantization. FIG. 2 is a schematic diagram of CTU division according to a quadtree result. As shown in FIG. 2, a size of a CTU is 64x64 pixels, and the CTU is divided into 16 CUs. Sizes of a CU 8 and a CU 16 are 32x32 pixels each, sizes of CUs 1, 2, 7, 13, 14, and 15 are 16x16 pixels each, and sizes of CUs 3, 4, 5, 6, 9, 10, 11, and 12 are 4x4 pixels each. The to-be-encoded image block may be an image block of any one of CUs 1 to 16.

In a possible implementation of this embodiment of the present invention, an image block division manner is introduced to a joint exploration test model (joint exploration test model, JEM), and an image block may be obtained through division in a manner of quadtree plus binary tree (quadtree plus binary tree, QTBT). In a QTBT structure, a coding unit CU may be square or rectangular. A root node of a tree-like code block is first divided in a quadtree manner, and then a leaf node of the quadtree is divided in a binary-tree manner. There are two division manners for the binary tree: horizontal symmetric division and vertical symmetric division. A leaf node of the binary tree is a coding unit CU, and may be directly used for prediction and transformation without further division. FIG. 25 is a diagram of an example of QTBT division. A solid line represents quadtree division, and a dashed line represents binary-tree division. A flag may be used for each division of the binary tree to identify a division manner: 0 is horizontal division, and 1 is vertical division. For a specific processing manner of QTBT, refer to related provisions in the JVET-D1001 document (Joint Video Exploration Team (JVET) of ITU-T SG 16 WP 3 and ISO/IEC JTC 1/SC 29/WG 114th Meeting: Chengdu, CN, 15-21 October 2016).

In a possible implementation of this embodiment of the present invention, the to-be-encoded image block may also be a rectangular block or an image block of another shape. As shown in FIG. 3, the to-be-encoded image block 1 is an example of a rectangular block, and the to-be-decoded image block 2 is an example of a convex block.

Residual data in this embodiment of the present invention is mainly used to reflect a difference between an image pixel value and a predictor of a code block. During predictive coding of video data, data information of a previously encoded frame needs to be used to predict a current to-be-encoded frame. A predictor is obtained through prediction.

The predictor is not completely equal to an actual value, and there is a specific residual between the predictor and the actual value. If the prediction is more appropriate, the predictor is closer to the actual value, and the residual is smaller. In this way, an amount of data can be greatly reduced by encoding the residual. During decoding on the decoder side, the residual plus the predictor is used to restore and reconstruct an initial image.

An embodiment of the present invention discloses a motion search method in an intra-frame prediction scenario. In an example, as shown in FIG. 8, within a given reference range, an encoded image block on the left of the current to-be-encoded image block X and an encoded image block above the current to-be-encoded image block X are used as reference blocks of the current to-be-encoded image block. For each pixel prediction mode, all reference blocks are traversed within the search range as all candidate predictors. In the current example, the current to-be-encoded block is a square block. If a rotation, symmetric transformation, or transposition operation is performed on the current to-be-encoded block, a result after the operation is still a square block, and traversal division in each pixel prediction mode has the same form.

An embodiment of the present invention further discloses a motion search method in an inter-frame prediction scenario. In an example, as shown in FIG. 9, for the current to-be-encoded image block in a current frame image, within a given reference range, the encoded image block 2 identified by a dashed line in the encoded frame image is used as a reference block of the current to-be-encoded image block. For each pixel prediction mode, all reference blocks are traversed within the search range as all candidate predictors.

In the current example, the current to-be-encoded image block is a rectangular block, and a shape of the rotated rectangle may be different from a shape before rotation. In this case, the encoded image block 1 may be determined as a reference block of the current to-be-encoded image block.

In this embodiment of the present invention, during motion estimation, in addition to an existing common prediction mode, prediction modes obtained after pixel location transformation need to be compared, so as to select an optimal prediction mode. Because an operation such as rotation or transposition performed on each predictor according to the pixel value transformation mode results in calculation redundancy and an increase in complexity, in an embodiment of the present invention, only an operation such as rotation or transposition is performed on the current to-be-encoded image block according to the pixel value transformation mode. In this way, in an entire motion estimation process, only one operation is performed on the current to-be-encoded image block for each pixel value transformation mode, thereby reducing calculation complexity.

In a possible implementation of this embodiment of the present invention, the obtaining a predictor of the current to-be-encoded image block based on the rate-distortion costs includes:

traversing all reference prediction blocks in each pixel prediction mode, using a rate-distortion optimization method to perform mode selection, and selecting a prediction mode with a smallest rate-distortion cost as an optimal prediction mode; or

traversing all candidate predictors in each pixel prediction mode, performing prediction mode rate-distortion optimization on prediction results, and selecting a prediction mode with a smallest cost as an optimal prediction mode; or traversing all candidate predictors in each pixel prediction mode, approximating bit rate costs of prediction results to obtain a plurality of candidate prediction modes, traversing all the candidate prediction modes, performing prediction mode rate-distortion optimization on the prediction results, and selecting a prediction mode with a smallest cost as an optimal prediction mode; and

after the optimal prediction mode is determined, using a candidate predictor in the prediction mode as the predictor of the to-be-encoded image block.

In the prior art, when determining an optimal predictor, an encoder side usually uses a rate-distortion optimization method:

$$cost = B + \lambda \cdot D$$

To be specific, a smallest combined value of a prediction residual cost and a motion vector cost is calculated, and rate-distortion optimization minimum values of all predictors are compared to determine the optimal predictor. B represents a prediction residual cost, and is usually calculated by using an SAD; D represents a motion cost; cost represents a rate-distortion cost; and $\lambda$ represents a rate-distortion coefficient.

Considering a cost caused by an operation corresponding to the pixel value transformation mode, the rate-distortion optimization cost calculation method in this embodiment of the present invention may be as follows:

$$cost = B + R + \lambda \cdot D,$$

where
cost represents a rate-distortion cost; B represents a prediction residual cost, and is usually calculated by using an SAD; D represents a motion cost, and is a quantity of bits required for transmitting a motion vector; R represents a transformation mode cost, and is used to represent an operation cost of a pixel value transformation mode; and $\lambda$ is a rate-distortion coefficient.

In an example, a method for calculating an operation cost of a pixel value transformation mode is as follows:

| Index value | 000 | 001 | 010 | 011 | 100 | 101 | 110 |
|---|---|---|---|---|---|---|---|
| R | $2N^2$ | $4N^2$ | $2N^2$ | $N^2$ | $3N^2$ | $5N^2$ | $3N^2$ |

R represents a transformation mode cost, N represents a size of a current to-be-encoded image block, and different index values correspond to different transformation modes (for a correspondence between an index value and a transformation mode, refer to an example in the embodiment of the first aspect).

In an example of the present invention, for a value of the rate-distortion coefficient $\lambda$, refer to a practice in the existing ITU-T H.265 standard, and a calculation formula is as follows:

$$\lambda = \sqrt{0.85 \times 2^{(QP-12)/3}},$$

where
QP represents a quantization parameter.

In an embodiment of the present invention, an SAD may be used to quickly measure a bit rate cost of a candidate predictor, that is, a degree of matching between a reference prediction block and a code block. First, a sum of absolute values of differences between pixels of two image blocks is calculated, and an SAD threshold $TH_{SAD}$ is set for each image block size. When a bit rate cost of a candidate predictor is greater than a corresponding threshold, the candidate predictor may be discarded. Finally, a plurality of candidate modes may be obtained. The selection of the SAD threshold needs to ensure that a candidate predictor with a relatively poor matching degree is quickly discarded, and a relatively large quantity of candidate predictors need to be retained, so as to avoid incorrect discarding and avoid a large error. In an embodiment, for SAD thresholds corresponding to different image block sizes, refer to the following settings:

| Size | 4x4 | 8x8 | 16x16 | 32x32 | 64x64 |
|---|---|---|---|---|---|
| $TH_{SAD}$ | 16 | 64 | 256 | 1024 | 4096 |

In an embodiment of the present invention, residual data is calculated according to the optimal prediction mode and a corresponding motion vector by using the current to-be-encoded image block and the predictor, and transformation, quantization, and entropy encoding are performed on the residual data to obtain encoded residual data.

In an embodiment of the present invention, for the current to-be-encoded image block, if the optimal prediction mode is not a prediction mode obtained after a pixel value transformation operation, a motion vector, residual data obtained after encoding, and the prediction mode of the current encoded object are written into a bitstream; if the optimal prediction mode is a prediction mode obtained after a pixel value transformation operation, a motion vector, residual data obtained after encoding, the prediction mode, and a pixel value transformation mode of the current encoded object are written into a bitstream. In a possible implementation, the pixel value transformation mode may be directly written into the bitstream. In another possible implementation, an index of the pixel value transformation mode may be written into the bitstream.

For a specific motion search manner and an implementation method, refer to related provisions in the prior art. Details are not described herein again.

In a possible implementation of this embodiment of the present invention, performing pixel value transformation on the current to-be-encoded image block to obtain a transformed image block includes: performing pixel value transformation on the current to-be-encoded image block according to a preset pixel value transformation mode to obtain the transformed image block.

In a possible implementation of this embodiment of the present invention, in the pixel value transformation mode, a transformation matrix may be used to perform spatial transformation on a pixel location.

In a possible implementation of this embodiment of the present invention, a determinant of the transformation matrix is not equal to 0.

In a possible implementation of this embodiment of the present invention, the transformation matrix includes at least one of the following matrices: a rotation transformation matrix, a symmetric transformation matrix, or a transpose transformation matrix.

In a possible implementation of this embodiment of the present invention, in the pixel value transformation mode, a transformation function may be used to perform spatial transformation on a pixel location.

In a possible implementation of this embodiment of the present invention, the transformation function includes at least one of the following functions: pixel location rotation, pixel location axisymmetric transformation, or pixel location transposition.

In a possible implementation of this embodiment of the present invention, the pixel location is rotated according to the following formula:

$$X1 = X0 \times \cos A + Y0 \times \sin A;$$

$$Y1 = Y0 \times \cos A - X0 \times \sin A;$$

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation. A is an angle at which the pixel rotates clockwise.

It may be understood that, when the pixel location rotation operation is performed, if the encoder side performs counterclockwise rotation, the bitstream needs to instruct the decoder side to use a clockwise rotation transformation mode. If the encoder side performs clockwise rotation, the bitstream needs to instruct the decoder side to use a counterclockwise rotation transformation mode.

In a possible implementation of this embodiment of the present invention, axisymmetric transformation is performed on the pixel location according to the following formula:

$$X1 = X0, \text{ and } Y1 = -Y0; \text{ or } X1 = -X0, \text{ and } Y1 = Y0,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

In a possible implementation of this embodiment of the present invention, the pixel location is transposed according to the following formula:

$$X1 = -X0, \text{ and } Y1 = -Y0,$$

where

(X0, Y0) is location coordinates of a pixel before transformation on a two-dimensional coordinate system in which a center of an image block is used as an origin, a horizontal direction is used as the x-axis, and a vertical direction is used as the y-axis. (X1, Y1) is pixel coordinates after transformation.

For a specific example of performing location transformation on the current to-be-encoded image block, refer to the processing manner described in the decoding method embodiment of the present invention.

As shown in FIG. 21, an embodiment of the present invention discloses a video data encoding method. The method includes the following steps.

S2101: Obtain a current to-be-encoded image frame.

S2102: Perform image block division on the current to-be-encoded image frame to obtain a current to-be-encoded image block.

S2103: Perform prediction processing on the current to-be-encoded image block to obtain a candidate predictor of the current to-be-encoded image block.

S2104: Perform pixel value spatial transformation on each candidate predictor to obtain a transformed candidate predictor.

S2105: Obtain a rate-distortion cost of the candidate predictor and a rate-distortion cost of the transformed candidate predictor according to a rate-distortion optimization method.

S2106: Obtain a predictor of the current to-be-encoded image block based on the rate-distortion costs, where the predictor of the current to-be-encoded image block is a candidate predictor or a transformed candidate predictor corresponding to a smallest rate-distortion cost of all the rate-distortion costs.

S2107: Encode the current to-be-encoded image block based on the predictor of the current to-be-encoded image block to generate a bitstream.

For a specific example of the encoding method in this embodiment of the present invention, refer to related descriptions in the foregoing embodiments. Details are not described herein again.

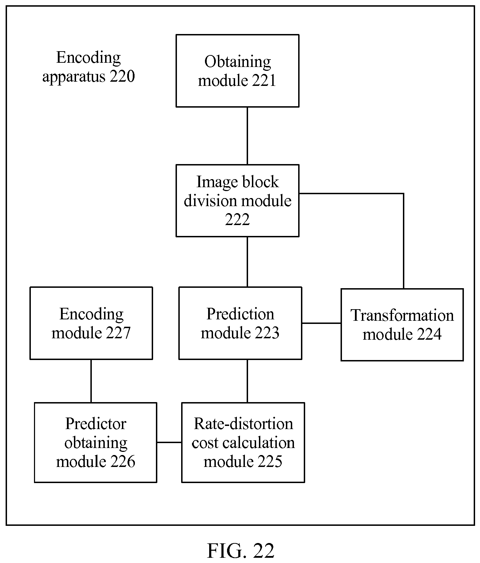

As shown in FIG. 22, an embodiment of the present invention discloses a video data encoding apparatus 220. The encoding apparatus 220 includes: an obtaining module 221, configured to obtain a current to-be-encoded image frame; an image block division module 222, configured to perform image block division on the current to-be-encoded image frame to obtain a current to-be-encoded image block; a prediction module 223, configured to perform prediction processing on the current to-be-encoded image block to obtain a candidate predictor of the current to-be-encoded image block; a transformation module 224, configured to perform spatial transformation on pixel values of the current to-be-encoded image block to obtain a transformed image block, where the prediction module 223 is further configured to perform prediction processing on the transformed image block to obtain a candidate predictor of the transformed image block; a rate-distortion cost calculation module 225, configured to obtain a rate-distortion cost of the candidate predictor of the current to-be-encoded image block and a rate-distortion cost of the candidate predictor of the transformed image block according to a rate-distortion optimization method; a predictor obtaining module 226, configured to obtain a predictor of the current to-be-encoded image block based on the rate-distortion costs, where the predictor of the current to-be-encoded image block is a candidate predictor corresponding to a smallest rate-distortion cost of all the rate-distortion costs; and an encoding module 227, configured to encode the current to-be-encoded image block based on the predictor of the current to-be-encoded image block to generate a bitstream.

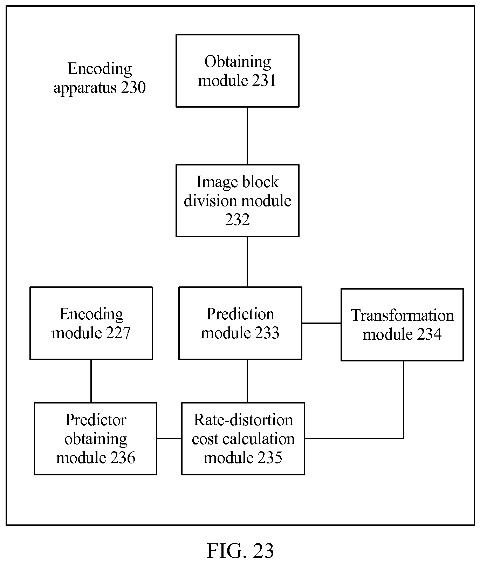

As shown in FIG. 23, an embodiment of the present invention discloses a video data encoding apparatus 230. The encoding apparatus 230 includes: an obtaining module 231, configured to obtain a current to-be-encoded image frame; an image block division module 232, configured to perform image block division on the current to-be-encoded image frame to obtain a current to-be-encoded image block; a prediction module 233, configured to perform prediction processing on the current to-be-encoded image block to obtain a candidate predictor of the current to-be-encoded image block; a transformation module 234, configured to perform pixel value spatial transformation on each candidate predictor to obtain a transformed candidate predictor; a rate-distortion cost calculation module 235, configured to obtain a rate-distortion cost of the candidate predictor and a rate-distortion cost of the transformed candidate predictor according to a rate-distortion optimization method; a predictor obtaining module 236, configured to obtain a predictor of the current to-be-encoded image block based on the rate-distortion costs, where the predictor of the current to-be-encoded image block is a candidate predictor or a transformed candidate predictor corresponding to a smallest rate-distortion cost of all the rate-distortion costs; and an encoding module 237, configured to encode the current to-be-encoded image block based on the predictor of the current to-be-encoded image block to generate a bitstream.

For specific functions of modules in the encoding apparatuses 220 and 230 in the embodiments of the present invention, refer to related descriptions of the encoding method embodiment of the present invention. Details are not described herein again.

As shown in FIG. 24, an embodiment of the present invention discloses a video data encoding apparatus 240. The apparatus 240 includes:

a processor 241 and a memory 242, where the memory 242 stores an executable instruction, which is used to instruct the processor 241 to perform the encoding method in the embodiment of the present invention.

In an example, based on the encoding and decoding method implemented by using the ITU-T H.265 reference software platform HM16.14, two 4K test sequences: Traffice and PeopleOnStreet are selected as to-be-encoded videos with a resolution of 3 840x2160; four different quantization parameters QPs are selected for testing by using a common test condition specified by reference software; and reference data is encoding and decoding results of the standard HM16.14 reference software platform. A performance test result is as follows:

| | | QPI Slice | Reference | | | | | | BD-rate (Traffic) | | |
|---|---|---|---|---|---|---|---|---|---|---|---|
| | | | kbps | Y psnr | U psnr | V psnr | EncT [s] | EncT [h] | Y | U | V |
| | Traffic | 22 | 16489.00 | 41.58 | 41.42 | 44.12 | 49.70 | 0.01 | -1.80 | -1.30 | -1.30 |
| | | 27 | 7828.70 | 38.99 | 39.78 | 42.25 | 41.70 | 0.01 | | | |
| Class A | | 32 | 4483.40 | 36.37 | 38.31 | 40.62 | 38.29 | 0.01 | | | |
| 4K | | 37 | 2772.00 | 33.55 | 37.02 | 39.32 | 36.00 | 0.01 | | | |
| | PeopleOnStree | 22 | 35122.00 | 40.19 | 44.55 | 44.48 | 64.59 | 0.02 | | | |
| | | 27 | 17694.00 | 37.00 | 42.47 | 42.95 | 54.12 | 0.02 | | | |
| | | 32 | 10241.00 | 33.99 | 40.81 | 41.58 | 48.81 | 0.01 | | | |
| | | 37 | 6013.80 | 30.80 | 39.48 | 40.44 | 44.33 | 0.01 | | | |
| | | | Tested | | | | | | BD-rate (PeopleOnStreet) | | |
| | | | kbps | Y psnr | U psnr | V psnr | EncT [s] | EncT [h] | Y | U | V |
| | | | 16367.00 | 41.61 | 41.43 | 44.14 | 47.05 | 0.01 | -1.80 | -1.90 | -1.80 |
| | | | 7753.60 | 39.03 | 39.80 | 42.27 | 39.20 | 0.01 | | | |
| | | | 4448.50 | 36.43 | 38.32 | 40.63 | 35.72 | 0.01 | | | |
| | | | 2755.80 | 33.61 | 37.04 | 39.33 | 33.41 | 0.01 | | | |
| | | | 34752.00 | 40.21 | 44.58 | 44.50 | 61.87 | 0.02 | | | |
| | | | 17498.00 | 37.04 | 42.50 | 42.97 | 51.63 | 0.01 | | | |
| | | | 10141.00 | 34.05 | 40.83 | 41.60 | 46.43 | 0.01 | | | |
| | | | 5965.60 | 30.87 | 39.50 | 40.46 | 41.90 | 0.01 | | | |

It can be learned from the result that, for a 4K video sequence, use of the method may result in an average 1.8% BD-Rate gain of a luminance component Y and an average 1.6% BD-Rate gain of a chrominance component U/V. Because a high-resolution 4K/8K video is a future development trend, the encoding and decoding method can be well applied.

It may be understood that the embodiments of the present invention may be implemented in any electronic device or apparatus that may need to encode and decode a video image, or encode a video image, or decode a video image.

An apparatus or a device to which the embodiments of the present invention are applied may include a controller or a processor used for a control apparatus. The controller may be connected to a memory. In the embodiments of the present invention, the memory may store image data or audio data, and/or store an instruction implemented on the controller. The controller may be further connected to a codec circuit that is suitable for implementing audio and/or video data encoding and decoding, or for auxiliary encoding and decoding that are implemented by the controller.

The apparatus or the device to which the embodiments of the present invention are applied may further include a radio interface circuit. The radio interface circuit is connected to the controller and is suitable for generating, for example, a wireless communication signal used for communication with a cellular communications network, a wireless communications system, or a wireless local area network. The apparatus may further include an antenna. The antenna is connected to the radio interface circuit, and is configured to send, to another apparatus (or a plurality of apparatuses), a radio frequency signal generated in the radio interface circuit, and receive a radio frequency signal from the another apparatus (or the plurality of apparatuses).

The apparatus or the device to which the embodiments of the present invention are applied may further include a camera that can record or detect video data, and the codec or the controller receives the data and processes the data. In some embodiments of the present invention, the apparatus may receive to-be-processed video image data from another device before transmission and/or storage. In some embodiments of the present invention, the apparatus may receive an image through a wireless or wired connection to encode/decode the image.

The technology of the present invention is not limited to a wireless application scenario. For example, the technology may be applied to video encoding and decoding in a plurality of multimedia applications that support the following applications: over-the-air television broadcast, cable television transmission, satellite television transmission, streaming video transmission (for example, through the Internet), encoding of video data stored in a data storage medium, decoding of video data stored in a data storage medium, or another application.

The apparatus or the device to which the embodiments of the present invention are applied may further include a display apparatus, such as a liquid crystal display (LCD), a plasma display, an organic light emitting diode (OLED) display, or another type of display apparatus.

The video encoder and the video decoder each may be implemented as any of a plurality of appropriate circuits, for example, one or more microprocessors, a digital signal processor (DSP), an application-specific circuit (ASIC), a field programmable gate array (FPGA), discrete logic, hardware, or any combination thereof. If the technology is partially or completely implemented by using software, the apparatus may store an instruction of the software in an appropriate non-transitory computer readable storage medium, and one or more processors may be used to execute an instruction in hardware to execute the technology of the present invention. Any one of the foregoing items (including hardware, software, a combination of hardware and software, and the like) may be considered as one or more processors. The video encoder and the video decoder each may be included in one or more encoders or decoders, and each may be integrated as a part of a combined encoder/decoder (codec (CODEC)) of another apparatus.

It may be understood that, for a specific implementation and an example of a related feature of the apparatus embodiment of the present invention, the implementation corresponding to the foregoing method embodiment may be used. Details are not described herein again.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

Content such as information exchange and an execution process between the modules in the apparatus and the system is based on a same idea as the method embodiments of the present invention. Therefore, for detailed content, refer to descriptions in the method embodiments of the present invention, and details are not described herein again.

A person of ordinary skill in the art may understand that all or some of the processes of the methods in the embodiments may be implemented by a computer program instructing related hardware. The program may be stored in a computer readable storage medium. When the program is executed, the processes of the methods in the embodiments are performed. The foregoing storage medium may be a magnetic disk, an optical disc, a read-only memory (ROM: read-only memory), a random access memory (RAM: random access memory), or the like.

**Claims**

1. A video data decoding method, wherein the method comprises:

   receiving a bitstream;
   parsing the bitstream to obtain residual data of a current to-be-decoded image block, prediction information of the current to-be-decoded image block, and a pixel value transformation mode identifier of the current to-be-decoded block, wherein the pixel value transformation mode identifier is used to indicate a pixel value transformation mode of the image block, and the pixel value transformation mode is used to indicate a change manner of a pixel location in the image block in space domain;
   obtaining predictors of the current to-be-decoded image block based on the prediction information of the current to-be-decoded image block;
   obtaining reconstructed pixel values of pixels of the current to-be-decoded image block based on the predictors of the current to-be-decoded image block and the residual data of the current to-be-decoded image block; and
   performing spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

2. The decoding method according to claim 1, wherein the prediction information comprises a motion vector of the current to-be-decoded image block, and correspondingly, the obtaining predictors of the current to-be-decoded image block based on the prediction information of the current to-be-decoded image block comprises:
   obtaining the predictors of the current to-be-decoded image block based on the motion vector of the current to-be-decoded image block.

3. The decoding method according to claim 1 or 2, wherein the pixel value transformation mode is one mode or a combination of a plurality of modes in the following transformation mode set, and the transformation mode set comprises a rotation transformation mode, a symmetric transformation mode, and a transpose transformation mode.

4. The decoding method according to claim 3, wherein the rotation transformation mode is used to indicate an angle change of a pixel location in the image block in space domain, and the symmetric transformation mode comprises horizontal axisymmetric transformation or vertical axisymmetric transformation.

5. A video data decoding method, wherein the method comprises:

   receiving a bitstream;
   parsing the bitstream to obtain residual data of a current to-be-decoded image block, prediction information of the current to-be-decoded image block, and a pixel value transformation mode identifier of the current to-be-decoded block, wherein the pixel value transformation mode identifier is used to indicate a pixel value transformation mode of the image block, and the pixel value transformation mode is used to indicate a change manner of a pixel location in the image block in space domain;
   obtaining predictors of the current to-be-decoded image block based on the prediction information of the current to-be-decoded image block;
   performing spatial transformation on the predictors of the current to-be-decoded image block according to the pixel value transformation mode corresponding to the transformation mode identifier of the current to-be-decoded image block, to obtain transformed predictors of the current to-be-decoded image block; and
   obtaining reconstructed pixel values of pixels of the current to-be-decoded image block based on the transformed predictors of the current to-be-decoded image block and the residual data of the current to-be-decoded image block.

6. The decoding method according to claim 5, wherein the prediction information comprises a motion vector of the current to-be-decoded image block, and correspondingly, the obtaining predictors of the current to-be-decoded image block based on prediction mode information of the current to-be-decoded image block comprises:
   obtaining the predictors of the current to-be-decoded image block based on the motion vector of the current to-be-decoded image block.

7. The decoding method according to claim 5 or 6, wherein the pixel value transformation mode is one mode or a combination of a plurality of modes in the following transformation mode set, and the transformation mode set comprises a rotation transformation mode, a symmetric transformation mode, and a transpose transformation mode.

8. The decoding method according to claim 7, wherein the rotation transformation mode is used to indicate an angle change of a pixel location in the image block in space domain, and the symmetric transformation mode comprises horizontal axisymmetric transformation or vertical axisymmetric transformation.

9. A video data encoding method, wherein the method comprises:

obtaining a current to-be-encoded image frame;
performing image block division on the current to-be-encoded image frame to obtain a current to-be-encoded image block;
performing prediction processing on the current to-be-encoded image block to obtain a candidate predictor of the current to-be-encoded image block;
performing spatial transformation on pixel values of the current to-be-encoded image block to obtain a transformed image block;
performing prediction processing on the transformed image block to obtain a candidate predictor of the transformed image block;
obtaining a rate-distortion cost of the candidate predictor of the current to-be-encoded image block and a rate-distortion cost of the candidate predictor of the transformed image block according to a rate-distortion optimization method;
obtaining a predictor of the current to-be-encoded image block based on the rate-distortion costs, wherein the predictor of the current to-be-encoded image block is a candidate predictor corresponding to a smallest rate-distortion cost of all the rate-distortion costs; and
encoding the current to-be-encoded image block based on the predictor of the current to-be-encoded image block to generate a bitstream.

10. The encoding method according to claim 9, wherein the performing spatial transformation on pixel values of the current to-be-encoded image block to obtain a transformed image block comprises:
performing spatial transformation on the pixel values of the current to-be-encoded image block according to a preset pixel value transformation mode, to obtain the transformed image block.

11. The encoding method according to claim 10, wherein the pixel value transformation mode is one mode or a combination of a plurality of modes in the following transformation mode set, and the transformation mode set comprises a rotation transformation mode, a symmetric transformation mode, and a transpose transformation mode.

12. The encoding method according to claim 11, wherein the rotation transformation mode is used to indicate an angle change of a pixel location in the image block in space domain, and the symmetric transformation mode comprises horizontal axisymmetric transformation or vertical axisymmetric transformation.

13. A video data encoding method, wherein the method comprises:

obtaining a current to-be-encoded image frame;
performing image block division on the current to-be-encoded image frame to obtain a current to-be-encoded image block;
performing prediction processing on the current to-be-encoded image block to obtain a candidate predictor of the current to-be-encoded image block;
performing pixel value spatial transformation on each candidate predictor to obtain a transformed candidate predictor;
obtaining a rate-distortion cost of the candidate predictor and a rate-distortion cost of the transformed candidate predictor according to a rate-distortion optimization method;
obtaining a predictor of the current to-be-encoded image block based on the rate-distortion costs, wherein the predictor of the current to-be-encoded image block is a candidate predictor or a transformed candidate predictor corresponding to a smallest rate-distortion cost of all the rate-distortion costs; and
encoding the current to-be-encoded image block based on the predictor of the current to-be-encoded image block to generate a bitstream.

14. The encoding method according to claim 13, wherein the performing pixel value spatial transformation on each candidate predictor to obtain a transformed candidate predictor comprises:

performing pixel value spatial transformation on the candidate predictor according to a preset pixel value transformation mode, to obtain the transformed candidate predictor.

15. The encoding method according to claim 14, wherein the pixel value transformation mode is one mode or a combination of a plurality of modes in the following transformation mode set, and the transformation mode set comprises a rotation transformation mode, a symmetric transformation mode, and a transpose transformation mode.

16. The encoding method according to claim 15, wherein the rotation transformation mode is used to indicate an angle change of a pixel location in the image block in space domain, and the symmetric transformation mode comprises horizontal axisymmetric transformation or vertical axisymmetric transformation.

17. A video data decoding apparatus, wherein the apparatus comprises:

a receiving module, configured to receive a bitstream;

a parsing module, configured to parse the bitstream to obtain residual data of a current to-be-decoded image block, prediction information of the current to-be-decoded image block, and a pixel value transformation mode identifier of the current to-be-decoded block, wherein the pixel value transformation mode identifier is used to indicate a pixel value transformation mode of the image block, and the pixel value transformation mode is used to indicate a change manner of a pixel location in the image block in space domain;

a prediction module, configured to obtain predictors of the current to-be-decoded image block based on the prediction information of the current to-be-decoded image block;

a reconstruction module, configured to obtain reconstructed pixel values of pixels of the current to-be-decoded image block based on the predictors of the current to-be-decoded image block and the residual data of the current to-be-decoded image block; and

a pixel value transformation module, configured to perform spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block.

18. The decoding apparatus according to claim 17, wherein the prediction information comprises a motion vector of the current to-be-decoded image block; and
the prediction module is configured to obtain the predictors of the current to-be-decoded image block based on the motion vector of the current to-be-decoded image block.

19. The decoding apparatus according to claim 17 or 18, wherein the pixel value transformation mode is one mode or a combination of a plurality of modes in the following transformation mode set, and the transformation mode set comprises a rotation transformation mode, a symmetric transformation mode, and a transpose transformation mode.

20. The decoding apparatus according to claim 19, wherein the rotation transformation mode is used to indicate an angle change of a pixel location in the image block in space domain, and the symmetric transformation mode comprises horizontal axisymmetric transformation or vertical axisymmetric transformation.

21. A video data decoding apparatus, wherein the apparatus comprises:

a receiving module, configured to receive a bitstream;

a parsing module, configured to parse the bitstream to obtain residual data of a current to-be-decoded image block, prediction information of the current to-be-decoded image block, and a pixel value transformation mode identifier of the current to-be-decoded block, wherein the pixel value transformation mode identifier is used to indicate a pixel value transformation mode of the image block, and the pixel value transformation mode is used to indicate a change manner of a pixel location in the image block in space domain;

a prediction module, configured to obtain predictors of the current to-be-decoded image block based on the prediction information of the current to-be-decoded image block;

a pixel value transformation module, configured to transform the predictors of the current to-be-decoded image block according to the pixel value transformation mode corresponding to the transformation mode identifier of the current to-be-decoded image block, to obtain transformed predictors of the current to-be-decoded image block; and

a reconstruction module, configured to obtain reconstructed pixel values of pixels of the current to-be-decoded image block based on the transformed predictors of the current to-be-decoded image block and the residual data of the current to-be-decoded image block.

22. The decoding apparatus according to claim 21, wherein the prediction information comprises a motion vector of the current to-be-decoded image block; and
the prediction module is configured to obtain the predictors of the current to-be-decoded image block based on the motion vector of the current to-be-decoded image block.

23. The decoding apparatus according to claim 21 or 22, wherein the pixel value transformation mode is one mode or a combination of a plurality of modes in the following transformation mode set, and the transformation mode set comprises a rotation transformation mode, a symmetric transformation mode, and a transpose transformation mode.

24. The decoding apparatus according to claim 23, wherein the rotation transformation mode is used to indicate an angle change of a pixel location in the image block in space domain, and the symmetric transformation mode comprises horizontal axisymmetric transformation or vertical axisymmetric transformation.

25. A video data encoding apparatus, wherein the apparatus comprises:

an obtaining module, configured to obtain a current to-be-encoded image frame;
an image block division module, configured to perform image block division on the current to-be-encoded image frame to obtain a current to-be-encoded image block;
a prediction module, configured to perform prediction processing on the current to-be-encoded image block to obtain a candidate predictor of the current to-be-encoded image block;
a transformation module, configured to perform spatial transformation on pixel values of the current to-be-encoded image block to obtain a transformed image block, wherein
the prediction module is further configured to perform prediction processing on the transformed image block to obtain a candidate predictor of the transformed image block;
a rate-distortion cost calculation module, configured to obtain a rate-distortion cost of the candidate predictor of the current to-be-encoded image block and a rate-distortion cost of the candidate predictor of the transformed image block according to a rate-distortion optimization method;
a predictor obtaining module, configured to obtain a predictor of the current to-be-encoded image block based on the rate-distortion costs, wherein the predictor of the current to-be-encoded image block is a candidate predictor corresponding to a smallest rate-distortion cost of all the rate-distortion costs; and
an encoding module, configured to encode the current to-be-encoded image block based on the predictor of the current to-be-encoded image block to generate a bitstream.

26. The encoding apparatus according to claim 25, wherein the transformation module is configured to:
perform spatial transformation on the pixel values of the current to-be-encoded image block according to a preset pixel value transformation mode, to obtain the transformed image block.

27. The encoding apparatus according to claim 26, wherein the pixel value transformation mode is one mode or a combination of a plurality of modes in the following transformation mode set, and the transformation mode set comprises a rotation transformation mode, a symmetric transformation mode, and a transpose transformation mode.

28. The encoding apparatus according to claim 27, wherein the rotation transformation mode is used to indicate an angle change of a pixel location in the image block in space domain, and the symmetric transformation mode comprises horizontal axisymmetric transformation or vertical axisymmetric transformation.

29. A video data encoding apparatus, wherein the apparatus comprises:

an obtaining module, configured to obtain a current to-be-encoded image frame;
an image block division module, configured to perform image block division on the current to-be-encoded image frame to obtain a current to-be-encoded image block;
a prediction module, configured to perform prediction processing on the current to-be-encoded image block to obtain a candidate predictor of the current to-be-encoded image block;
a transformation module, configured to perform pixel value spatial transformation on each candidate predictor to obtain a transformed candidate predictor;
a rate-distortion cost calculation module, configured to obtain a rate-distortion cost of the candidate predictor and a rate-distortion cost of the transformed candidate predictor according to a rate-distortion optimization method;
a predictor obtaining module, configured to obtain a predictor of the current to-be-encoded image block based on the rate-distortion costs, wherein the predictor of the current to-be-encoded image block is a candidate predictor or a transformed candidate predictor corresponding to a smallest rate-distortion cost of all the rate-distortion costs; and
an encoding module, configured to encode the current to-be-encoded image block based on the predictor of the current to-be-encoded image block to generate a bitstream.

30. The encoding apparatus according to claim 29, wherein the transformation module is configured to:
perform pixel value spatial transformation on the candidate predictor according to a preset pixel value transformation mode, to obtain the transformed candidate predictor.

31. The encoding apparatus according to claim 30, wherein the pixel value transformation mode is one mode or a combination of a plurality of modes in the following transformation mode set, and the transformation mode set comprises a rotation transformation mode, a symmetric transformation mode, and a transpose transformation mode.

32. The encoding apparatus according to claim 31, wherein the rotation transformation mode is used to indicate an angle change of a pixel location in the image block in space domain, and the symmetric transformation mode comprises horizontal axisymmetric transformation or vertical axisymmetric transformation.

33. A video data decoding apparatus, wherein the apparatus comprises:
a processor and a memory, wherein the memory stores an executable instruction, and the executable instruction is used to instruct the processor to perform the decoding method according to any one of claims 1 to 8.

34. A video data encoding apparatus, wherein the apparatus comprises:
a processor and a memory, wherein the memory stores an executable instruction, and the executable instruction is used to instruct the processor to perform the encoding method according to any one of claims 9 to 16.

4x4          8x8          16x16

FIG. 1

FIG. 2

To-be-decoded image block 1

To-be-decoded image block 2

To-be-decoded image frame

FIG. 3

Y

(X0, Y0)

A

(X1, Y1)

X

FIG. 4

FIG. 5

FIG. 6

| 20 | 40 | 20 | 40 |
| 20 | 40 | 20 | 40 |
| 20 | 40 | 20 | 40 |
| 20 | 40 | 20 | 40 |

90°
counterclockwise
rotation

Transpose

| 20 | 20 | 20 | 20 |
| 40 | 40 | 40 | 40 |
| 20 | 20 | 20 | 20 |
| 40 | 40 | 40 | 40 |

Original image block

Horizontal
axisymmetric

| 40 | 40 | 40 | 40 |
| 20 | 20 | 20 | 20 |
| 40 | 40 | 40 | 40 |
| 20 | 20 | 20 | 20 |

| 20 | 40 | 20 | 40 |
| 20 | 40 | 20 | 40 |
| 20 | 40 | 20 | 40 |
| 20 | 40 | 20 | 40 |

FIG. 7

FIG. 8

Encoded frame                    Current frame

FIG. 9

FIG. 10

| Receive a bitstream |
| --- |

S1101

| Parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain |
| --- |

S1102

| Obtain predictors of the current to-be-decoded image block based on the prediction information of the current to-be-decoded image block |
| --- |

S1103

| Obtain reconstructed pixel values of pixels of the current to-be-decoded image block based on the predictors of the current to-be-decoded image block and the residual data of the current to-be-decoded image block |
| --- |

S1104

| Perform spatial transformation on the reconstructed pixel values of the pixels of the current to-be-decoded image block according to the pixel value transformation mode corresponding to the transformation mode identifier of the current to-be-decoded image block, to obtain transformed pixel values of the pixels of the current to-be-decoded image block |
| --- |

S1105

FIG. 11

| Receive a bitstream | S1201 |

↓

| Parse the bitstream to obtain residual data, a motion vector, and a pixel value transformation mode identifier | S1202 |

↓

| Obtain predictors based on the motion vector | S1203 |

↓

| Obtain pixel values of a reconstructed image block based on the predictors and the residual data | S1204 |

↓

| Perform pixel value transformation on the pixel values of the reconstructed image block to obtain transformed pixel values | S1205 |

FIG. 12

FIG. 13

Receive a bitstream

S1401

Parse the bitstream to obtain residual data, prediction information, and a pixel value transformation mode identifier

S1402

Obtain predictors based on the prediction information

S1403

Obtain pixel values of a reconstructed image block based on the predictors and the residual data

S1404

Perform pixel value transformation on the pixel values of the reconstructed image block to obtain transformed pixel values

S1405

FIG. 14

Decoder 150

Reference block 1

Reference block 2

Reference block 2

Current to-be-decoded image block

Current to-be-decoded frame

FIG. 15

Obtain a current to-be-encoded image frame
S1601

Perform image block division on the current to-be-encoded image frame to obtain a current to-be-encoded image block
S1602

Perform prediction processing on the current to-be-encoded image block to obtain at least one candidate predictor of the current to-be-encoded image block
S1603

Perform pixel value spatial transformation on the current to-be-encoded image block to obtain a transformed image block
S1604

Perform prediction processing on the transformed image block to obtain at least one candidate predictor of the transformed image block
S1605

Obtain a rate-distortion cost of the candidate predictor of the current to-be-encoded image block and a rate-distortion cost of the candidate predictor of the transformed image block according to a rate-distortion optimization method
S1606

Obtain a predictor of the current to-be-encoded image block based on the rate-distortion costs, where the predictor of the current to-be-encoded image block is a candidate predictor corresponding to a smallest rate-distortion cost of all the rate-distortion costs
S1607

Encode the current to-be-encoded image block based on the predictor of the current to-be-encoded image block to generate a bitstream
S1608

FIG. 16

| Receive a bitstream | S1701 |

↓

| Parse the bitstream to obtain residual data of a current to-be-decoded image block, prediction information of the current to-be-decoded image block, and a pixel value transformation mode identifier of the current to-be-decoded block, where the pixel value transformation mode identifier is used to indicate a pixel value transformation mode of the image block, and the pixel value transformation mode is used to indicate a change manner of a pixel location in the image block in space domain | S1702 |

↓

| Obtain predictors of the current to-be-decoded image block based on the prediction information of the current to-be-decoded image block | S1703 |

↓

| Perform spatial transformation on the predictors of the current to-be-decoded image block according to the pixel value transformation mode corresponding to the transformation mode identifier of the current to-be-decoded image block, to obtain transformed predictors of the current to-be-decoded image block | S1704 |

↓

| Obtain reconstructed pixel values of pixels of the current to-be-decoded image block based on the transformed predictors of the current to-be-decoded image block and the residual data of the current to-be-decoded image block | S1705 |

FIG. 17

Decoding apparatus 180

Receiving module 181

Parsing module 182

Prediction module 183

Reconstruction module 184

Pixel value transformation module 185

FIG. 18

Decoding apparatus 190

Receiving module 191

Parsing module 192

Prediction module 193

Pixel value transformation module 194

Reconstruction module 195

FIG. 19

Decoding apparatus 200

| | |
|---|---|
| Processor 201 | Memory 202 |

FIG. 20

Obtain a current to-be-encoded image frame — S2101

Perform image block division on the current to-be-encoded image frame to obtain a current to-be-encoded image block — S2102

Perform prediction processing on the current to-be-encoded image block to obtain at least one candidate predictor of the current to-be-encoded image block — S2103

Perform pixel value spatial transformation on each candidate predictor to obtain at least one transformed candidate predictor — S2104

Obtain a rate-distortion cost of the candidate predictor and a rate-distortion cost of the transformed candidate predictor according to a rate-distortion optimization method — S2105

Obtain a predictor of the current to-be-encoded image block based on the rate-distortion costs, where the predictor of the current to-be-encoded image block is a candidate predictor or a transformed candidate predictor corresponding to a smallest rate-distortion cost of all the rate-distortion costs — S2106

Encode the current to-be-encoded image block based on the predictor of the current to-be-encoded image block to generate a bitstream — S2107

FIG. 21

FIG. 22

FIG. 23

Encoding apparatus 240

Processor 241 — Memory 242

FIG. 24

FIG. 25

## INTERNATIONAL SEARCH REPORT

| International application No. |
| --- |
| PCT/CN2017/077706 |

### A. CLASSIFICATION OF SUBJECT MATTER

H04N 19/50 (2014.01) i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 编码, 解码, 预测, 残差, 空域, 空间, 变化, 变换, 旋转, 角度, 方向, encod+, decod+, predict+, residual, spatial, chang+, rotat+, angle, direction

### C. DOCUMENTS CONSIDERED TO BE RELEVANT

| Category* | Citation of document, with indication, where appropriate, of the relevant passages | Relevant to claim No. |
| --- | --- | --- |
| A | CN 102595117 A (TSINGHUA UNIVERSITY et al.), 18 July 2012 (18.07.2012), description, paragraphs [0030] -[0036], and figure 2 | 1-34 |
| A | CN 101222635 A (BEIJING UNIVERSITY OF TECHNOLOGY), 16 July 2008 (16.07.2008), description, page 4, paragraph 10 to page 5, paragraph 1, and figure 4 | 1-34 |
| A | CN 101137065 A (HUAWEI TECHNOLOGIES CO., LTD. et al.), 05 March 2008 (05.03.2008), entire document | 1-34 |
| A | CN 101557514 A (HUAWEI TECHNOLOGIES CO., LTD.), 14 October 2009 (14.10.2009), entire document | 1-34 |
| A | CN 101500160 A (HUAWEI TECHNOLOGIES CO., LTD. et al.), 05 August 2009 (05.08.2009), entire document | 1-34 |
| A | US 2008240240 A1 (KABUSHIKI KAISHA TOSHIBA), 02 October 2008 (02.10.2008), entire document | 1-34 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 November 2017 | 28 December 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HE, Yanjuan<br><br>Telephone No. (86-10) 61648240 |

Form PCT/ISA/210 (second sheet) (July 2009)

## INTERNATIONAL SEARCH REPORT
### Information on patent family members

International application No.

PCT/CN2017/077706

| Patent Documents referred in the Report | Publication Date | Patent Family | Publication Date |
|---|---|---|---|
| CN 102595117 A | 18 July 2012 | CN 102595117 B | 12 March 2014 |
| | | WO 2012095037 A1 | 19 July 2012 |
| CN 101222635 A | 16 July 2008 | CN 100586184 C | 27 January 2010 |
| CN 101137065 A | 05 March 2008 | WO 2008025300 A1 | 06 March 2008 |
| | | CN 101518089 A | 26 August 2009 |
| | | CN 101518089 B | 01 December 2010 |
| CN 101557514 A | 14 October 2009 | WO 2009124511 A1 | 15 October 2009 |
| | | US 8693543 B2 | 08 April 2014 |
| | | EP 2262270 A1 | 15 December 2010 |
| | | US 2010272183 A1 | 28 October 2010 |
| | | CN 101557514 B | 09 February 2011 |
| | | EP 2262270 A4 | 06 April 2011 |
| | | JP 2011511541 A | 07 April 2011 |
| | | KR 101145698 B1 | 24 May 2012 |
| | | US 2014105298 A1 | 17 April 2014 |
| | | KR 20100105730 A | 29 September 2010 |
| CN 101500160 A | 05 August 2009 | WO 2009094946 A1 | 06 August 2009 |
| | | CN 101500160 B | 29 April 2015 |
| US 2008240240 A1 | 02 October 2008 | JP 2008252176 A | 16 October 2008 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105556971 A

- CN 105247871 A

**Non-patent literature cited in the description**

- *Joint Video Exploration Team (JVET) of ITU-T SG 16 WP 3 and ISO/IEC JTC 1/SC 29/WG 114th Meeting,* 15 October 2016